# EUROPEAN PATENT APPLICATION

(11) **EP 3 402 270 A1**
(43) Date of publication of application: **14.11.2018**
(21) Application number: 16888637.2
(22) Date of filing: 01.02.2016
(51) Int. Cl.: H04W 72/04, H04W 88/00

(54) **METHOD AND DEVICE FOR TRANSMITTING UPLINK INFORMATION**

(71) Applicant: Huawei Technologies Co., Ltd., Longgang District Shenzhen, Guangdong 518129 (CN)
(72) Inventor: WU, Zuomin, Shenzhen Guangdong 518129 (CN); LYU, Yongxia, Shenzhen Guangdong 518129 (CN); LI, Chaojun, Shenzhen Guangdong 518129 (CN); MA, Sha, Shenzhen Guangdong 518129 (CN)
(74) Representative: Pfenning, Meinig & Partner mbB
(86) International application number: PCT/CN2016/073110
(87) International publication number: WO 2017/132811

(57) **Abstract**

Embodiments of the present invention provide an uplink information transmission method and apparatus. The method includes: determining, by user equipment, uplink data information and uplink control information, where a length of a time domain resource corresponding to the uplink data information is not equal to a length of a time domain resource corresponding to the uplink control information; and when the time domain resource corresponding to the uplink data information overlaps with the time domain resource corresponding to the uplink control information, transmitting, by the user equipment, first information on an overlapping time domain resource, where the first information includes at least one of second information and third information, the second information includes some information or all information in the uplink control information, and the third information includes some information or all information in the uplink data information. According to the present invention, a problem of transmitting uplink control information or uplink data information when there are uplink control information and uplink data information that correspond to time domain resources of different lengths and a conflict occurs between the time domain resources corresponding to the uplink control information and the uplink data information can be resolved.

## Description

### TECHNICAL FIELD

The present invention relates to the communications field, and in particular, to an uplink information transmission method and apparatus.

### BACKGROUND

In a communications network, a delay is a key performance indicator (Key Performance Indicator, KPI), and also affects use experience of users. With development of communication protocols, a scheduling interval of a physical layer that most obviously affects a delay is also increasingly small. A scheduling interval is 10 ms in initial Wideband Code Division Multiple Access (Wideband Code Division Multiple Access, WCDMA), a scheduling interval is shortened to 2 ms in High Speed Packet Access (High-Speed Packet Access, HSPA), and a scheduling interval is shortened to 1 ms in Long Term Evolution (Long Term Evolution, LTE).

Due to a small-delay service requirement, a short transmission time interval (Transmission Time Interval, TTI) frame structure needs to be introduced to an LTE physical layer, so as to further shorten a scheduling interval, and a TTI may be shortened from 1 ms to a value between 1 symbol (symbol) and 0.5 ms. The aforementioned symbol may be an orthogonal frequency division multiplexing (Orthogonal Frequency Division Multiplexing, OFDM) symbol in an LTE system.

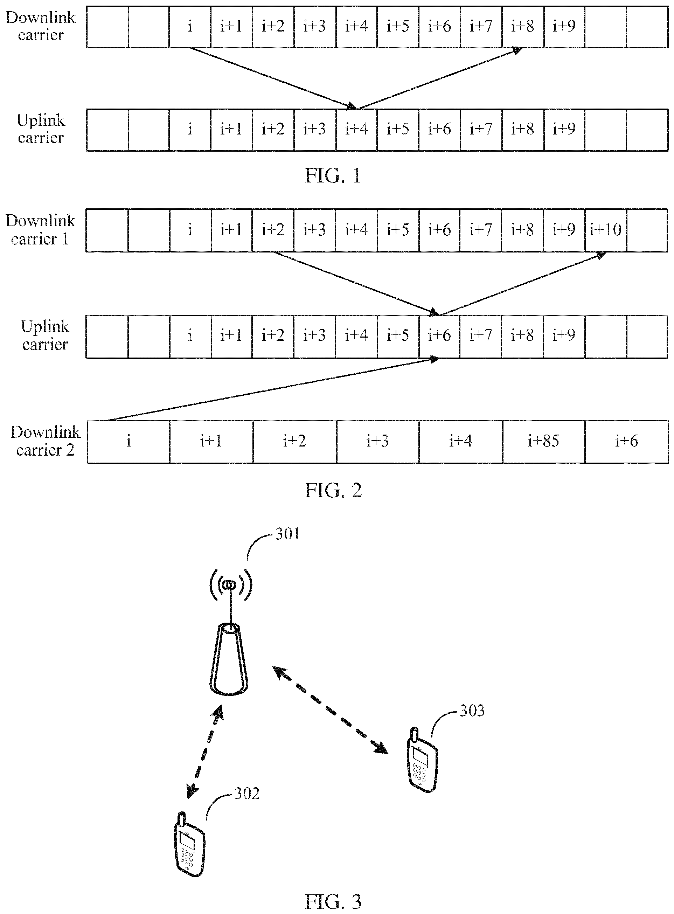

FIG. 1 is a diagram of an RTT (Round-Trip Time, round trip time of transmission) delay of data transmission of a base station. As shown in FIG. 1, based on a hybrid automatic repeat request (Hybrid Automatic Repeat Request, HARQ) technology, if the base station transmits data to user equipment in a TTI that is numbered i in a downlink (Downlink, DL for short) link, and if the user equipment correctly demodulates and decodes the received data, the user equipment feeds back an acknowledgement (Acknowledgement, ACK) to the base station in a TTI that is numbered i+4 in an uplink (uplink, UL for short) link. If the user equipment has not correctly demodulated or decoded the received data, the user equipment feeds back a negative acknowledgement (Negative Acknowledgment, NACK) to the base station in the TTI that is numbered i+4. The base station determines, based on the ACK or NACK received in the TTI that is numbered i+4, to perform initial transmission or retransmission processing on the data in a TTI that is numbered i+8 in the downlink link. The ACK or NACK that is fed back may also be collectively referred to as HARQ-ACK information. In the prior art, lengths of TTIs for transmission in both the uplink link and the downlink link are 1 ms. If a short TTI transmission technology is introduced, for example, when the lengths of the TTIs for transmission in the uplink link and the downlink link are shortened to 0.5 ms or one or more symbols, it may be considered that a processing time is reduced in equal proportion, and the foregoing RTT delay also applies.

LTE supports a carrier aggregation technology, that is, the base station configures a plurality of carriers for one UE to improve a data rate of the UE. UE supporting the carrier aggregation technology may simultaneously detect downlink data on a plurality of downlink carriers, and the UE needs to simultaneously make a HARQ feedback mechanism for the downlink data on the plurality of downlink carriers. Therefore, it requires that one channel can support HARQ-ACK information of the downlink data on the plurality of downlink carriers. In addition, to enable the base station to schedule the UE and transmit the downlink data on the plurality of downlink carriers, the UE needs to feed back channel state information CSI (Channel State Information) on the carriers to the base station. In a particular uplink TTI, the UE may need to simultaneously feed back HARQ-ACK feedback information for downlink scheduling data and the CSI on the plurality of carriers to the base station. The UE may further send scheduling request (Scheduling Request, SR) information to the base station, to request an uplink UL-SCH resource from the base station.

In a carrier aggregation scenario, UE may support receiving data on a plurality of downlink carriers, but only has a single carrier transmission capability for uplink transmission. A TTI length of a downlink carrier for scheduling transmission of uplink data may be the same as a TTI length of an uplink carrier, or may be different from the TTI length of the uplink carrier. When the UE supports receiving data on a plurality of downlink carriers of different TTI lengths, the UE may need to feed back HARQ-ACK feedback information for downlink scheduling data and transmit the uplink data to the base station in a particular uplink TTI. A TTI length of feeding back the HARQ-ACK feedback information may not be equal to a TTI length of transmitting the uplink data. Using FIG. 2 as an example, FIG. 2 is a schematic diagram of a conflict between an uplink control channel and an uplink data channel that are of different TTI lengths. As shown in FIG. 2, FIG. 2 includes one uplink carrier (Component carrier, component carrier, CC for short) and two downlink carriers, and the two downlink carriers are respectively a downlink carrier 1 and a downlink carrier 2. A TTI time length of the downlink carrier 1 is equal to that of the uplink carrier, and a TTI time length of the downlink carrier 2 is not equal to that of the downlink carrier 1. It is assumed that the TTI length of the downlink carrier is the same as the TTI length of the uplink carrier, and data transmission on the uplink carrier is scheduled by using control signaling on the downlink carrier 1. If the base station sends, in a TTI that is numbered i+2 and that is of the downlink carrier 1, an uplink grant (grant) for scheduling user data transmission, after receiving the uplink grant, the UE transmits uplink data information in a TTI that is numbered i+6 and that is of the uplink carrier. If the base station sends data in a TTI that is numbered i and that is of the downlink carrier 2, after receiving the data, the UE feeds back uplink control information at a moment corresponding to a TTI that is numbered i+4 and that is of the downlink carrier 2, that is, in the TTI that is numbered i+6 and that is of the uplink carrier. That is, a conflict between uplink data and uplink HARQ-ACK information corresponding to the downlink carrier 2 may occur in the TTI that is numbered i+6 and that is of the uplink carrier.

In the prior art, there is no processing method for transmitting uplink control information or uplink data information when there are uplink control information and uplink data information that correspond to time domain resources of different lengths and a conflict occurs between the time domain resources corresponding to the uplink control information and the uplink data information.

### SUMMARY

In view of this, an objective of embodiments of the present invention is to provide an , to resolve a problem.

To resolve the foregoing technical problem, the embodiments of the present invention disclose the following technical solutions.

According to a first aspect, an uplink information transmission method is provided, and the method includes:
determining, by user equipment, uplink data information and uplink control information, where a length of a time domain resource corresponding to the uplink data information is not equal to a length of a time domain resource corresponding to the uplink control information, and the uplink control information includes at least one of hybrid automatic repeat request information, channel state information, and scheduling request information; and
when the time domain resource corresponding to the uplink data information overlaps with the time domain resource corresponding to the uplink control information, transmitting, by the user equipment, first information on the overlapping time domain resource, where the first information includes at least one of second information and third information, where
the second information includes some information in the uplink control information or all information in the uplink control information, and the third information includes some information in the uplink data information or all information in the uplink data information.

Optionally, that a length of a time domain resource corresponding to the uplink data information is not equal to a length of a time domain resource corresponding to the uplink control information includes:
the length of the time domain resource corresponding to the uplink data information is greater than the length of the time domain resource corresponding to the uplink control information; or
the length of the time domain resource corresponding to the uplink data information is less than the length of the time domain resource corresponding to the uplink control information.

Optionally, the first information includes the second information, and the method further includes at least one of the following steps:
transmitting, by the user equipment, the second information on the overlapping time domain resource in a resource corresponding to the uplink data information; or
transmitting, by the user equipment, the second information on the overlapping time domain resource in a resource corresponding to the uplink control information.

Optionally, the transmitting, by the user equipment, the second information on the overlapping time domain resource in a resource corresponding to the uplink data information includes at least one of the following steps:
transmitting, by the user equipment by using a format corresponding to the uplink control information, the second information on the overlapping time domain resource in the resource corresponding to the uplink data information;
transmitting, by the user equipment, the second information on a predefined resource in the overlapping time domain resource in the resource corresponding to the uplink data information;
repeatedly transmitting, by the user equipment, the second information on the overlapping time domain resource in the resource corresponding to the uplink data information; and
transmitting, by the user equipment by using a same modulation scheme as that of the uplink data information, the second information on the overlapping time domain resource in the resource corresponding to the uplink data information.

Further optionally, the method further includes:
further transmitting, by the user equipment, a reference signal on the overlapping time domain resource in the resource corresponding to the uplink data information.

Optionally, the first information includes the third information. The uplink control information includes the channel state information and does not include the hybrid automatic repeat request information and the scheduling request information.

Optionally, the first information includes the third information, and the method further includes at least one of the following steps:
transmitting, by the user equipment, the third information on the overlapping time domain resource in a resource corresponding to the uplink data information; and
transmitting, by the user equipment, the third information on the overlapping time domain resource in a resource corresponding to the uplink control information.

Optionally, the first information includes the second information and the third information, and the method further includes at least one of the following steps:
transmitting, by the user equipment, the first information on the overlapping time domain resource in a resource corresponding to the uplink data information; and
transmitting, by the user equipment, the first information on the overlapping time domain resource in a resource corresponding to the uplink control information.

Optionally, the transmitting, by the user equipment, the first information on the overlapping time domain resource in a resource corresponding to the uplink data information includes at least one of the following steps:
transmitting, by the user equipment, the second information in the first information on a predefined resource in the overlapping time domain resource in the resource corresponding to the uplink data information;
transmitting, by the user equipment, the third information in the first information on a resource other than the predefined resource in the overlapping time domain resource in the resource corresponding to the uplink data information;
transmitting, by the user equipment, the first information on the overlapping time domain resource in the resource corresponding to the uplink data information, where the second information in the first information and the third information in the first information occupy different time-frequency resources; and
transmitting, by the user equipment by using a same modulation scheme, the second information and the third information in the first information on the overlapping time domain resource in the resource corresponding to the uplink data information.

Further optionally, the method further includes:
further transmitting, by the user equipment, a reference signal on the overlapping time domain resource in the resource corresponding to the uplink data information.

Optionally, the method further includes:
receiving, by the user equipment, indication information sent by a base station, where the indication information includes at least one of the following information:
   resource allocation information of the time domain resource corresponding to the uplink control information;
   resource allocation information of the time domain resource corresponding to the uplink data information;
   indication information of the overlapping time domain resource;
   indication information of content included in the first information; and
   indication information of a manner of transmitting the first information on the overlapping time domain resource.

According to a second aspect, an uplink information transmission method is provided, and the method includes:
receiving, by a base station, uplink data information on a time domain resource corresponding to the uplink data information, and receiving uplink control information on a time domain resource corresponding to the uplink control information, where a length of the time domain resource corresponding to the uplink data information is not equal to a length of the time domain resource corresponding to the uplink control information, and the uplink control information includes at least one of hybrid automatic repeat request information, channel state information, and scheduling request information; and
when the time domain resource corresponding to the uplink data information overlaps with the time domain resource corresponding to the uplink control information, receiving, by the base station, first information on the overlapping time domain resource, where the first information includes at least one of second information and third information, where
the second information includes some information in the uplink control information or all information in the uplink control information, and the third information includes some information in the uplink data information or all information in the uplink data information.

Optionally, that a length of the time domain resource corresponding to the uplink data information is not equal to a length of the time domain resource corresponding to the uplink control information includes:
the length of the time domain resource corresponding to the uplink data information is greater than the length of the time domain resource corresponding to the uplink control information; or
the length of the time domain resource corresponding to the uplink data information is less than the length of the time domain resource corresponding to the uplink control information.

Optionally, the first information includes the second information, and the method further includes at least one of the following steps:
receiving, by the base station, the second information on the overlapping time domain resource in a resource corresponding to the uplink data information; or
receiving, by the base station, the second information on the overlapping time domain resource in a resource corresponding to the uplink control information.

Optionally, the receiving, by the base station, the second information on the overlapping time domain resource in a resource corresponding to the uplink data information includes at least one of the following steps:
receiving, by the base station by using a format corresponding to the uplink control information, the second information on the overlapping time domain resource in the resource corresponding to the uplink data information;
receiving, by the base station, the second information on a predefined resource in the overlapping time domain resource in the resource corresponding to the uplink data information;
combining and receiving, by the base station, the second information on the overlapping time domain resource in the resource corresponding to the uplink data information; and
receiving, by the base station by using a same modulation scheme as that of the uplink data information, the second information on the overlapping time domain resource in the resource corresponding to the uplink data information.

Further optionally, the method further includes:
further receiving, by the base station, a reference signal on the overlapping time domain resource in the resource corresponding to the uplink data information; and
demodulating, by the base station, the first information based on the reference signal.

Optionally, the first information includes the third information. The uplink control information includes the channel state information and does not include the hybrid automatic repeat request information and the scheduling request information.

Optionally, the first information includes the third information, and the method further includes at least one of the following steps:
receiving, by the base station, the third information on the overlapping time domain resource in a resource corresponding to the uplink data information; and
receiving, by the base station, the third information on the overlapping time domain resource in a resource corresponding to the uplink control information.

Optionally, the first information includes the second information and the third information, and the method further includes at least one of the following steps:
receiving, by the base station, the first information on the overlapping time domain resource in a resource corresponding to the uplink data information; and
receiving, by the base station, the first information on the overlapping time domain resource in a resource corresponding to the uplink control information.

Optionally, the receiving, by the base station, the first information on the overlapping time domain resource in a resource corresponding to the uplink data information includes at least one of the following steps:
receiving, by the base station, the second information in the first information on a predefined resource in the overlapping time domain resource in the resource corresponding to the uplink data information;
receiving, by the base station, the third information in the first information on a resource other than the predefined resource in the overlapping time domain resource in the resource corresponding to the uplink data information;
receiving, by the base station, the first information on the overlapping time domain resource in the resource corresponding to the uplink data information, where the second information in the first information and the third information in the first information occupy different time-frequency resources; and
receiving, by the base station by using a same modulation scheme, the second information and the third information in the first information on the overlapping time domain resource in the resource corresponding to the uplink data information.

Further optionally, the method further includes:
further receiving, by the base station, a reference signal on the overlapping time domain resource in the resource corresponding to the uplink data information; and
demodulating, by the base station, the first information based on the reference signal.

Optionally, the method further includes:
sending, by the base station, indication information to user equipment, where the indication information includes at least one of the following information:
   resource allocation information of the time domain resource corresponding to the uplink control information;
   resource allocation information of the time domain resource corresponding to the uplink data information;
   indication information of the overlapping time domain resource;
   indication information of content included in the first information; and
   indication information of a manner of transmitting the first information on the overlapping time domain resource.

According to a third aspect, an uplink information transmission device is provided, and the device includes: a bus system, a processor, and a transceiver. The processor is connected to the transceiver by using the bus system, and the processor and the transceiver perform the method according to the first aspect or any possible implementation of the first aspect.

According to a fourth aspect, an uplink information transmission device is provided, and the device includes: a bus system, a processor, and a transceiver. The processor is connected to the transceiver by using the bus system, and the processor and the transceiver perform the method according to the second aspect or any possible implementation of the second aspect.

According to a fifth aspect, an uplink information transmission apparatus is provided, configured to perform the method according to the first aspect or any possible implementation of the first aspect. Specifically, the apparatus includes units configured to perform the method according to the first aspect or any possible implementation of the first aspect.

According to a sixth aspect, an uplink information transmission apparatus is provided, configured to perform the method according to the second aspect or any possible implementation of the second aspect. Specifically, the apparatus includes units configured to perform the method according to the second aspect or any possible implementation of the second aspect.

The embodiments of the present invention provide the uplink information transmission method and apparatus, so that it can be ensured that the uplink control information having a relatively high priority is transmitted, or demodulation performance of the uplink data information can be ensured, or it can be ensured that the uplink control information having a relatively high priority is transmitted when demodulation performance of the uplink data information is relatively little affected.

It should be understood that, the above general descriptions and the following detailed descriptions are merely examples, and do not intend to limit the protection scope of the present invention.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a diagram of an RTT delay of data transmission of a base station in the prior art;
FIG. 2 is a schematic diagram of a conflict between an uplink control channel and an uplink data channel that are of different TTI lengths;
FIG. 3 is a schematic diagram of an application scenario according to an embodiment of the present invention;
FIG. 4 is a schematic diagram of a conflict between transmission of uplink data information and transmission of uplink control information that are of different TTI lengths;
FIG. 5 is another schematic diagram of a conflict between transmission of uplink data information and transmission of uplink control information that are of different TTI lengths;
FIG. 6 is a flowchart of an uplink information transmission method according to an embodiment of the present invention;
FIG. 7 is a schematic diagram of overlapping between a time domain resource corresponding to uplink control information and a time domain resource corresponding to uplink data information that are on a same uplink carrier according to an embodiment of the present invention;
FIG. 8 is a schematic diagram of overlapping between a time domain resource corresponding to uplink control information and a time domain resource corresponding to uplink data information that are on a same uplink carrier according to an embodiment of the present invention;
FIG. 9 is a schematic diagram of overlapping between a time domain resource corresponding to uplink control information and a time domain resource corresponding to uplink data information that are on a same uplink carrier according to an embodiment of the present invention;
FIG. 10 is a schematic diagram of overlapping between a time domain resource corresponding to uplink control information and a time domain resource corresponding to uplink data information that are on a same uplink carrier according to an embodiment of the present invention;
FIG. 11 is a flowchart of an uplink information transmission method according to an embodiment of the present invention;
FIG. 12 is a schematic diagram of an uplink control information transmission apparatus according to an embodiment of the present invention; and
FIG. 13 is a schematic diagram of an uplink control information transmission apparatus according to an embodiment of the present invention.

The foregoing accompanying drawings show specific embodiments of the present invention, and more detailed descriptions are provided in the following. The accompanying drawings and text descriptions are not intended to limit the scope of the idea of the present invention in any manner, but are intended to describe the concept of the present invention to a person skilled in the art with reference to particular embodiments.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

Numerous specific details are mentioned in the following detailed descriptions to provide a thorough understanding of the present invention. However, a person skilled in the art should understand that the present invention may be implemented without these specific details. In other embodiments, well-known methods, processes, components, and circuits are not described in detail, so as to prevent the embodiments from being blurred.

The embodiments of the present invention provide an uplink information transmission method and apparatus, to resolve a conflict between uplink control information and uplink data information during transmission.

The following briefly describes an application environment of the embodiments of the present invention, and an LTE system or an LTE-A system is used as an example. However, the application environment of the embodiments of the present invention is not limited to LTE-related systems, and any wireless communications system performing data transmission through scheduling may use the solutions provided in the embodiments of the present invention.

It may be understood that in the LTE or LTE-A system, in terms of a time dimension, a time length of one radio frame is 10 ms, a time length of one subframe is 1 ms, and one radio frame includes ten subframes. Specifically, there are two subframe formats: One is a normal cyclic prefix (Normal Cyclic Prefix, NCP) subframe format. One NCP subframe includes 14 OFDM symbols or two timeslots. The OFDM symbols are numbered from 0 to 13, OFDM symbols numbered from 0 to 6 are an odd-numbered timeslot, and OFDM symbols numbered from 7 to 13 are an even-numbered timeslot. The other one is an extended cyclic prefix (Extended Cyclic Prefix, ECP) subframe format. One ECP subframe includes 12 OFDM symbols or two timeslots. The OFDM symbols are numbered from 0 to 11, OFDM symbols numbered from 0 to 5 are an odd-numbered timeslot, and OFDM symbols numbered from 6 to 11 are an even-numbered timeslot.

In terms of a frequency dimension, a smallest unit is a subcarrier. In terms of a combination of time and frequency dimensions, for a resource used for transmission at an antenna port, a smallest unit is a resource element (Resource Element, RE), and one RE include one OFDM symbol in a time domain and includes one subcarrier in a frequency domain. A resource element group (Resource-Element Group, REG) may include an integer quantity of REs. For example, one REG may include four or 16 REs. One physical resource block (Physical Resource Block, PRB) includes one timeslot in the time domain, and includes 12 subcarriers in the frequency domain. One subframe includes one PRB pair (PRB pair). One resource block (Resource Block, RB) includes one subframe in the time domain, and includes 12 subcarriers in the frequency domain. A resource block group (Resource Block Group, RBG) may include an integer quantity of PRBs. For example, one RBG may include one PRB, or two, three, four, or another integer quantity of PRBs.

An uplink symbol is referred to as a single carrier frequency division multiple access (Single Carrier-Frequency Division Multiple Access, SC-FDMA for short) symbol, and a downlink symbol is referred to as an orthogonal frequency division multiplexing (Orthogonal Frequency Division Multiplexing, OFDM for short) symbol. If a subsequent technology introduces an uplink multiple access manner of orthogonal frequency division multiple access (Orthogonal Frequency Division Multiple Access, OFDMA), the uplink symbol may also be referred to as an OFDM symbol. In the embodiments of the present invention, the uplink symbol and the downlink symbol are both collectively referred to as a symbol. One symbol includes a cyclic prefix (Cyclic Prefix, CP) part and an information segment part. The information segment part includes all information of a symbol, and a CP is repetition of a signal in a part of an information segment. The symbol mentioned in the technical solutions in the embodiments of the present invention may alternatively be a symbol of communication of another type, and this is not limited in the present invention.

A physical channel (physical channel) is specifically used for transmission of data information and/or control information. In the embodiments of the present invention, the physical channel includes one or a combination of the following: a PUSCH (physical uplink shared channel, PUSCH, physical uplink shared channel), a PUCCH (physical uplink control channel, physical uplink control channel), a PDCCH (Physical Downlink Control Channel, physical downlink control channel), an EPDCCH (Enhanced-Physical Downlink Control Channel, enhanced physical downlink control channel), a PCFICH (Physical Control Format Indicator Channel, physical control format indicator channel), a PHICH (Physical hybrid ARQ indicator channel, physical hybrid ARQ indicator channel), a PDSCH (Physical Downlink Shared Channel, physical downlink shared channel), and the like, or channels that are newly introduced in a standard and that have a same function and different names, for example, a control channel or data channel introduced in short TTI transmission.

Short TTI data transmission is data transmission whose TTI is less than one subframe or 1 ms. For example, a TTI length is 0.5 ms, or a TTI length is one of one symbol, and two, three, four, five and six symbols, or a TTI length is a combination of at least two different TTI lengths in one symbol, and two, three, four, five, six, and seven symbols. For example, 1 ms includes four TTIs, and lengths of the four TTIs are respectively four, three, four, and three symbols, or three, four, three, and four symbols, or a combination of other different TTI lengths. For ease of description, for the case in which 1 ms includes four TTIs, unless particularly stated, a TTI length being 0.25 ms is described in the embodiments of the present invention. Similarly, a data packet whose TTI is less than one subframe or 1 ms is referred to as a short TTI data packet. The short TTI data transmission may be continuously distributed or may be discontinuously distributed in the frequency domain. It should be noted that in consideration of backward-compatibility, 1-ms TTI transmission and the short TTI transmission may coexist in a system.

FIG. 3 is a schematic diagram of an application scenario according to an embodiment of the present invention. The application scenario shown in FIG. 3 includes a cell base station 301, and user equipment 302 and user equipment 303 that are located in coverage of the cell base station 301 and that communicate with the cell base station 301. The cell base station 301 is a base station of an LTE system, and the user equipment 302 and the user equipment 303 are user equipments in the corresponding LTE system. The cell base station 301 and the user equipment 302 are both devices supporting short TTI transmission, and the user equipment 303 is a device not supporting the short TTI transmission. The cell base station 301 may communicate with the user equipment 302 by using a short TTI or a normal TTI of 1 ms separately. The cell base station 301 may communicate with the user equipment 303 by using the normal TTI of 1 ms.

In the embodiments of the present invention, user equipment (User Equipment, UE) may be referred to as a terminal (Terminal), a mobile station (Mobile Station, MS), a mobile terminal (Mobile Terminal), and the like. The user equipment may communicate with one or more core networks by using a radio access network (Radio Access Network, RAN). For example, the user equipment may be a mobile phone (also referred to as a "cellular" phone) or a computer with a mobile terminal. For example, the user equipment may be a portable, pocket-sized, handheld, computer built-in, or an in-vehicle mobile apparatus, which exchanges voice and/or data with the radio access network.

In the embodiments of the present invention, a base station may be an evolved NodeB (Evolutional Node B, eNB or e-NodeB for short), a macro base station, a micro base station (also referred to as a "small base station"), a picocell base station, an access point (Access Point, AP), a transmission point (Transmission Point, TP), another network-side device, and the like in an LTE system or an LAA-LTE system. This is not limited in the present invention.

The LTE system supports a carrier aggregation technology, that is, the base station configures a plurality of carriers for one UE to improve a data rate of the UE. UE supporting the carrier aggregation technology may simultaneously detect downlink data on a plurality of downlink carriers, and the UE needs to simultaneously make a HARQ feedback mechanism for the downlink data on the plurality of downlink carriers. Therefore, it requires that one uplink channel can support transmission of HARQ-ACK information corresponding to the downlink data on the plurality of downlink carriers. In addition, to enable the base station to schedule the UE and transmit the downlink data on the plurality of downlink carriers, the UE needs to feed back channel state information CSI (Channel State Information, CSI) on the carriers to the base station. The CSI fed back by the UE to the base station is classified into periodic CSI and aperiodic CSI. For the periodic CSI, a feedback period of each downlink carrier is independently configured. When periodic CSI of a plurality of downlink component carriers needs to be simultaneously fed back, the UE only feeds back periodic CSI that is of a component carrier and that has a highest priority. For periodic CSI that is of a plurality of downlink component carriers and that has a same priority, periodic CSI of a downlink component carrier having a smallest index in the downlink component carriers is fed back. For the aperiodic CSI, a control bit in dynamic downlink control information DCI is used to trigger the aperiodic CSI. In a particular uplink TTI, the UE may need to simultaneously feed back uplink HARQ-ACK feedback information for downlink scheduling data and the CSI on the plurality of carriers to the base station. The UE may further send scheduling request (Scheduling Request, SR) information to the base station, to request an uplink UL-SCH resource from the base station. It should be noted that uplink HARQ-ACK information corresponding to a downlink transmission data block, CSI feedback information obtained by measuring a downlink channel state, and the scheduling request SR information sent by the UE are all uplink control information (Uplink Control Information, UCI). The CSI feedback information may include at least one of CQI (Channel Quality Indicator, channel quality indicator) information, PMI (Precoding Matrix Indicator, precoding matrix indication) information, and RI (Rank Indicator, ranking indication) information. The UCI may be carried on a PUCCH, or may be carried on a PUSCH. A case in which the UCI is carried on a PUSCH is mainly considered in the embodiments of the present invention.

After the short TTI transmission is introduced, the UE may support receiving downlink data of a plurality of different TTI lengths. An entire transmission data block that can be independently demodulated may be transmitted in each TTI. The UE may also support sending uplink data of a plurality of different TTI lengths. A TTI length of downlink transmission may be the same as that of uplink transmission corresponding to the downlink transmission. For example, TTI lengths of the downlink transmission and the uplink transmission corresponding to the downlink transmission are both 0.25 ms. The TTI length of the downlink transmission may be less than the TTI length of the uplink transmission corresponding to the downlink transmission. For example, the TTI length of the downlink transmission is two symbols, and the TTI length of the uplink transmission is three symbols. Alternatively, the TTI length of the downlink transmission may be greater than the TTI length of the uplink transmission corresponding to the downlink transmission. For example, the TTI length of the downlink transmission is 0.25 ms, and the TTI length of the uplink transmission is one symbol. It should be noted that a plurality of downlink transmission data blocks corresponding to different TTI lengths may be from a same carrier or may be from different carriers. When the UE has a plurality of downlink carriers, the UE further needs to feed back CSI on different carriers. After a TTI is shortened, a corresponding HARQ processing delay is also shortened. It may be considered that the HARQ processing delay is shortened in equal proportion, that is, the short TTI data transmission still complies with a HARQ feedback delay of four times the TTI length. Alternatively, it may be considered that the short TTI data transmission complies with a HARQ feedback delay greater than four times the TTI length or a HARQ feedback delay less than four times the TTI length. This is not limited in the present invention. However, regardless of which case, a case in which the UE needs to transmit, on an uplink carrier at a same time point, uplink data information and uplink control information whose lengths are not equal may occur, and consequently, a conflict between transmission of the uplink data information and the uplink control information may occur. The problem is described in detail below. For ease of description, a conflict between transmission of uplink data information by UE and transmission of uplink control information by the UE that are of different TTI lengths in a carrier aggregation scenario is used for description. In this example, the short TTI data transmission complies with the HARQ feedback delay of four times the TTI length, and it is assumed that a TTI length of uplink transmission is the same as a TTI length of downlink transmission corresponding to the uplink transmission.

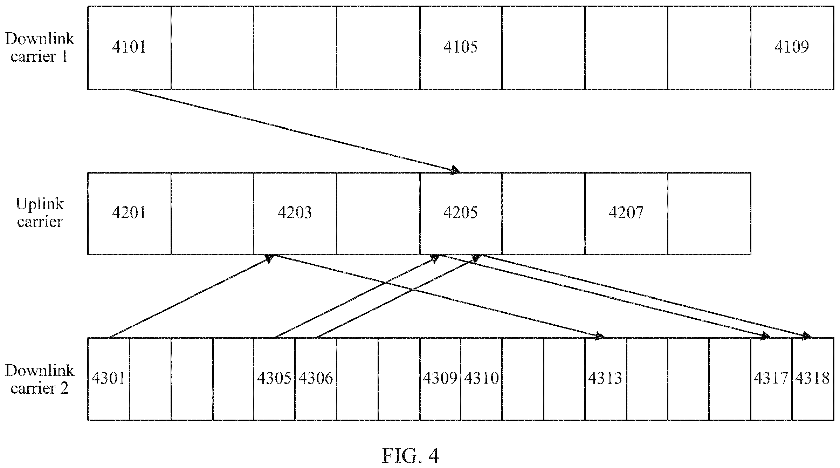

FIG. 4 is a schematic diagram of a conflict between transmission of uplink data information and transmission of uplink control information that are of different TTI lengths.

As shown in FIG. 4, UE supports receiving data on two downlink carriers and sending data on one uplink carrier. The two downlink carriers are respectively a downlink carrier 1 and a downlink carrier 2. TTI lengths of the downlink carrier 1 and the uplink carrier are greater than a TTI length of the downlink carrier 2, the TTI length of the downlink carrier 1 is equal to the TTI length of the uplink carrier, and data transmission on the uplink carrier is scheduled by using control signaling on the downlink carrier 1. It is assumed that one TTI time length of the downlink carrier 1 is equal to N TTI time lengths of the downlink carriers 2. That is, it is assumed that the TTI time length of the downlink carrier 2 is L2 and the TTI time length of the downlink carrier 1 is L1=N*L2. In the embodiment shown in FIG. 4, L1=2*L2.

Each cuboid in FIG. 4 represents one TTI of corresponding uplink data or downlink data, that is, 4101 is a TTI of the downlink carrier 1, 4201 is a TTI of the uplink carrier, and 4301 is a TTI of the downlink carrier 2. As shown in FIG. 4, a TTI time length of 4101 is equal to a TTI time length of 4201, and the TTI time length of 4101 is equal to twice a TTI time length of 4301.

The TTI time length of the downlink carrier 1 is equal to the TTI time length of the uplink carrier. Therefore, after receiving an uplink grant in a k^{th} TTI of the downlink carrier 1, the UE transmits uplink data information in a TTI that is of the uplink carrier and that corresponds to a (k+4)^{th} TTI of the downlink carrier 1. For example, after receiving the uplink grant in 4101, the UE transmits the uplink data information in 4205 corresponding to 4105.

The TTI time length of the uplink carrier is twice the TTI time length of the downlink carrier 2, and HARQ-ACK information corresponding to data in a k^{th} TTI of the downlink carrier 2 should be fed back in a TTI that is of the uplink carrier and that corresponds to a (k+4)^{th} TTI of the downlink carrier 2. For example, for HARQ-ACK information corresponding to data in 4301, uplink control information should be fed back in a HARQ time sequence in a front half of 4203 corresponding to 4305. For data in 4306, uplink control information should be fed back in a rear half of 4205 in the HARQ time sequence.

In the embodiment shown in FIG. 4, data information and HARQ-ACK information that are transmitted on the uplink carrier may be conflicted with each other. Conflict types may include:
(1) if there is uplink grant transmission to the UE in 4101 of the downlink carrier 1 and there is data transmission to the UE in 4305 of the downlink carrier 2, data information and HARQ-ACK information that are transmitted by the UE in 4205 of the uplink carrier are conflicted with each other; or if there is uplink grant transmission to the UE in 4101 of the downlink carrier 1 and there is data transmission to the UE in 4306 of the downlink carrier 2, data information and HARQ-ACK information that are transmitted by the UE in 4205 of the uplink carrier are conflicted with each other; and
(2) if there is uplink grant transmission to the UE in 4101 of the downlink carrier 1 and there simultaneously is data transmission to the UE in both 4305 and 4306 of the downlink carrier 2, data information and HARQ-ACK information that are transmitted by the UE in 4205 of the uplink carrier are conflicted with each other.

FIG. 4 shows a case in which a length of a time domain resource corresponding to uplink data information is greater than a length of a time domain resource corresponding to uplink control information, that is, a TTI length of a PUSCH is greater than a TTI length of a PUCCH.

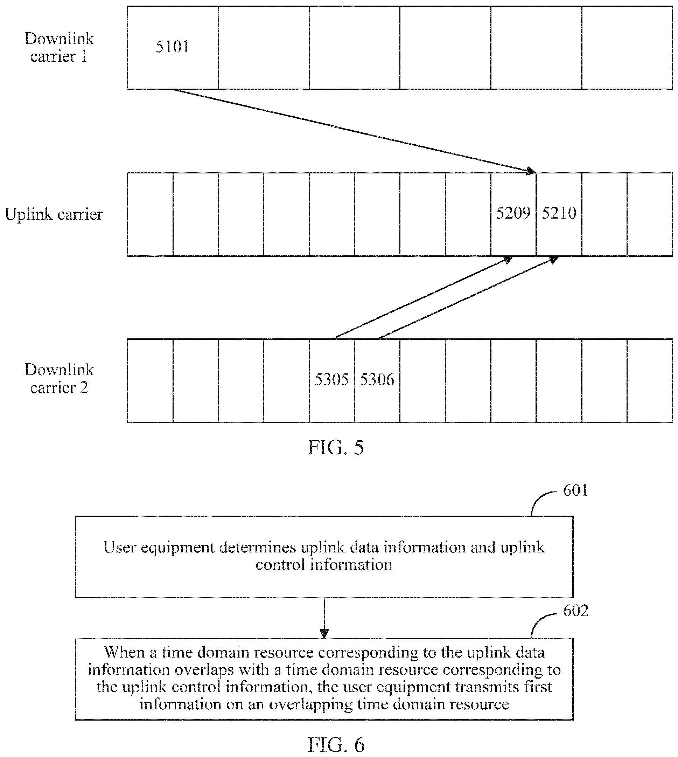

FIG. 5 is a schematic diagram of a conflict between transmission of uplink data information and transmission of uplink control information that are of different TTI lengths.

A scenario shown in FIG. 5 includes one uplink carrier and two downlink carriers, and the two downlink carriers are respectively a downlink carrier 1 and a downlink carrier 2. A TTI length of the downlink carrier 1 is greater than TTI lengths of the uplink carrier and the downlink carrier 2, the TTI time length of the downlink carrier 1 is twice the TTI time length of the downlink carrier 2, and the TTI time length of the downlink carrier 2 is equal to the TTI time length of the uplink carrier. Data transmission on the uplink carrier is scheduled by using control signaling on the downlink carrier 2.

HARQ-ACK information corresponding to data transmitted in 5101 of the downlink carrier 1 is fed back in 5209 and 5210 of the uplink carrier. A PUSCH corresponding to an uplink grant transmitted in 5305 of the downlink carrier 2 is transmitted in 5209. A PUSCH corresponding to an uplink grant transmitted in 5306 of the downlink carrier 2 is transmitted in 5210.

In the scenario shown in FIG. 5, data information and HARQ-ACK information that are transmitted on the uplink carrier may be conflicted with each other. Conflict types may include:
(3) if there is data transmission to UE in 5101 of the downlink carrier 1 and there is uplink grant transmission to the UE in 5305 of the downlink carrier 2, data information and HARQ-ACK information that are transmitted by the UE in 5209 of the uplink carrier are conflicted with each other; or if there is data transmission to UE in 5101 of the downlink carrier 1 and there is uplink grant transmission to the UE in 5306 of the downlink carrier 2, and information and HARQ-ACK information that are transmitted by the UE in 5210 of the uplink carrier are conflicted with each other; and
(4) if there is data transmission to UE in 5101 of the downlink carrier 1 and there is uplink grant transmission to the UE in both 5305 and 5306 of the downlink carrier 2, data information and HARQ-ACK information that are transmitted by the UE in 5209 and 5210 of the uplink carrier are conflicted with each other.

FIG. 5 shows a case in which a length of a time domain resource corresponding to uplink data information is less than a length of a time domain resource corresponding to uplink control information, that is, a TTI length of a PUSCH is less than a length of a PUCCH.

To resolve the foregoing technical problems, an embodiment of the present invention provides the following method.

### Embodiment 1

Referring to FIG. 6, FIG. 6 is a flowchart of an uplink information transmission method according to this embodiment of the present invention. As shown in FIG. 6, the method includes the following steps.

Step 601: User equipment determines uplink data information and uplink control information.

A length of a time domain resource corresponding to the uplink data information is not equal to a length of a time domain resource corresponding to the uplink control information.

The uplink control information includes at least one of hybrid automatic repeat request (HARQ-ACK) information, channel state information (CSI), and scheduling request (SR) information.

It should be noted that the channel state information includes at least one of CQI information, PMI information, and RI information.

It should be noted that a chronological order of determining the uplink data information and the uplink control information by the user equipment in step 601 is not limited. The user equipment may determine the uplink data information first, and then determine the uplink control information. Alternatively, the user equipment may determine the uplink control information first, and then determine the uplink data information. Alternatively, the user equipment may simultaneously determine the uplink data information and the uplink control information.

In a process of specifically implementing step 601, that a length of a time domain resource corresponding to the uplink data information is not equal to a length of a time domain resource corresponding to the uplink control information includes: the length of the time domain resource corresponding to the uplink data information is greater than the length of the time domain resource corresponding to the uplink control information, or the length of the time domain resource corresponding to the uplink data information is less than the length of the time domain resource corresponding to the uplink control information.

In the process of specifically implementing step 601, optionally, the length of the time domain resource corresponding to the uplink data information is a length of a PUSCH corresponding to the uplink data information, and the length of the time domain resource corresponding to the uplink control information is a length of a PUCCH corresponding to the uplink control information. Optionally, the length of the time domain resource corresponding to the uplink data information is greater than the length of the time domain resource corresponding to the uplink control information, and the length of the time domain resource corresponding to the uplink control information is less than 1 millisecond. Optionally, the length of the time domain resource corresponding to the uplink data information is a first transmission time interval TTI time length, the length of the time domain resource corresponding to the uplink control information is a second transmission time interval TTI time length, and the second TTI time length is less than 1 millisecond. Further optionally, the length of the time domain resource corresponding to the uplink data information is 1 ms, and the length of the time domain resource corresponding to the uplink control information is 0.5 ms, 0.25 ms, four symbols, three symbols, two symbols, or one symbol. Alternatively, the length of the time domain resource corresponding to the uplink data information and the length of the time domain resource corresponding to the uplink control information are both less than 1 ms. For example, the length of the time domain resource corresponding to the uplink data information is 0.5 ms, and the length of the time domain resource corresponding to the uplink control information is 0.25 ms, four symbols, three symbols, two symbols, or one symbol.

In the process of specifically implementing step 601, optionally, the length of the time domain resource corresponding to the uplink data information is less than the length of the time domain resource corresponding to the uplink control information, and the length of the time domain resource corresponding to the uplink data information is less than 1 millisecond. Optionally, the length of the time domain resource corresponding to the uplink data information is a first transmission time interval TTI time length, the length of the time domain resource corresponding to the uplink control information is a second transmission time interval TTI time length, and the length of the time domain resource corresponding to the uplink data information is less than 1 millisecond. Further optionally, the length of the time domain resource corresponding to the uplink control information is 1 ms, and the length of the time domain resource corresponding to the uplink data information is 0.5 ms, 0.25 ms, four symbols, three symbols, two symbols, or one symbol. Alternatively, the length of the time domain resource corresponding to the uplink control information and the length of the time domain resource corresponding to the uplink data information are both less than 1 ms. For example, the length of the time domain resource corresponding to the uplink control information is 0.5 ms, and the length of the time domain resource corresponding to the uplink data information is 0.25 ms, four symbols, three symbols, two symbols, or one symbol.

In the process of specifically implementing step 601, optionally, a base station enables, in a predefined manner, the user equipment to determine the time domain resource corresponding to the uplink data information and/or the time domain resource corresponding to the uplink control information. Optionally, the base station allocates, to the user equipment, the time domain resource corresponding to the uplink data information and/or the time domain resource corresponding to the uplink control information. Further optionally, the base station notifies, by using RRC signaling, MAC signaling, physical layer signaling, or the like, the user equipment of resource allocation information of the time domain resource corresponding to the uplink data information and/or resource allocation information of the time domain resource corresponding to the uplink control information. Further optionally, the RRC signaling, the MAC signaling, or the physical layer signaling may be carried on the same carrier as the time domain resource, or may be carried on other carrier.

In the process of specifically implementing step 601, optionally, the user equipment receives indication information sent by the base station, and the indication information includes the resource allocation information of the time domain resource corresponding to the uplink data information and/or the resource allocation information of the time domain resource corresponding to the uplink control information. It should be noted that the resource allocation information of the time domain resource corresponding to the uplink data information may be indication information of the length of the time domain resource corresponding to the uplink data information, indication information of a TTI length of the PUSCH corresponding to the uplink data information, indication information of a PUSCH channel resource in an uplink grant (UL grant) corresponding to the uplink data information, or resource allocation information that corresponds to the uplink data information and that includes time domain resource indication, and/or frequency domain resource indication, and/or space domain resource indication, and/or code resource indication. The resource allocation information of the time domain resource corresponding to the uplink control information may be indication information of the length of the time domain resource corresponding to the uplink control information, indication information of a TTI length of the PUSCH corresponding to the uplink control information, indication information of a PUCCH channel resource corresponding to the uplink control information, or resource allocation information that corresponds to the uplink control information and that includes time domain resource indication, and/or frequency domain resource indication, and/or space domain resource indication, and/or code resource indication.

It should be noted that in step 601, the time domain resource corresponding to the uplink data information or the time domain resource corresponding to the uplink control information is a time domain resource that is pre-allocated to the user equipment for transmitting the uplink data information or the uplink control information. A time domain resource used during actual transmission of the uplink data information or the uplink control information may not be all the pre-allocated time domain resource corresponding to the uplink data information or the uplink control information.

Step 602: When a time domain resource corresponding to the uplink data information overlaps with a time domain resource corresponding to the uplink control information, the user equipment transmits first information on the overlapping time domain resource.

The first information includes at least one of second information and third information.

The second information includes some information in the uplink control information or all information in the uplink control information, and the third information includes some information in the uplink data information or all information in the uplink data information.

Specifically, the first information may include the following eight cases:
the some information in the uplink control information;
the all information in the uplink control information;
the some information in the uplink data information;
the all information in the uplink data information;
the some information in the uplink control information and the some information in the uplink data information;
the some information in the uplink control information and the all information in the uplink data information;
the all information in the uplink control information and the some information in the uplink data information; and
the some information in the uplink control information and the all information in the uplink data information.

For ease of description, in all the embodiments of the present invention, "the some information in the uplink control information or the all information in the uplink control information" may also be described as "the some information or the all information in the uplink control information" or "some or all of the uplink control information", and the three descriptions indicate a same meaning. Similarly, "the some information in the uplink control information" and "some of the uplink control information" indicate a same meaning, and "the all information in the uplink control information" and "all of the uplink control information" indicate a same meaning. "The some information in the uplink data information or the all information in the uplink data information" may also be described as "the some information or the all information in the uplink data information" or "some or all of the uplink data information", and the three descriptions indicate a same meaning. Similarly, "the some information in the uplink data information" and "some of the uplink data information" indicate a same meaning, and "the all information in the uplink data information" and "all of the uplink data information" indicate a same meaning.

In a process of specifically implementing step 602, optionally, the user equipment determines that the time domain resource corresponding to the uplink data information overlaps with the time domain resource corresponding to the uplink control information. Optionally, an overlapping manner between the time domain resource corresponding to the uplink data information and the time domain resource corresponding to the uplink control information may be that the time domain resource corresponding to the uplink data information includes all or part of the time domain resource corresponding to the uplink control information. Optionally, an overlapping manner between the time domain resource corresponding to the uplink data information and the time domain resource corresponding to the uplink control information may be that the time domain resource corresponding to the uplink control information includes all or part of the time domain resource corresponding to the uplink data information. Optionally, a length of the overlapping time domain resource is less than 1 ms. For example, the length of the overlapping time domain resource may be one symbol or several symbols, or may be one timeslot. Optionally, the base station sends indication information of the overlapping time domain resource to the user equipment. Specifically, the indication information of the overlapping time domain resource may include at least one of a length of the overlapping time domain resource, a symbol mark of the overlapping time domain resource, a timeslot mark of the overlapping time domain resource, a starting location of the overlapping time domain resource, and an ending location of the overlapping time domain resource. Further optionally, the base station notifies the user equipment of the indication information of the overlapping time domain resource by using RRC signaling, MAC signaling, physical layer signaling, or the like. The RRC signaling, the MAC signaling, or the physical layer signaling may be carried on the same carrier as the time domain resource, or may be carried on other carrier.

It should be noted that a resource corresponding to the uplink control information or a resource corresponding to the uplink data information includes a resource in a time domain, and further includes at least one of a resource in a frequency domain, a code resource, a resource of a space antenna port, and the like. The overlapping means that the resource corresponding to the uplink data information overlaps with the resource corresponding to the uplink control information in the time domain. In the frequency domain, and/or a code domain, and/or a space domain, the resource corresponding to the uplink data information may overlap the resource corresponding to the uplink control information, or may not overlap the resource corresponding to the uplink control information. This is not limited in this embodiment of the present invention.

It should be noted that in this embodiment of the present invention, an example in which a time domain resource corresponding to one piece of uplink control information overlaps with a time domain resource corresponding to one piece of uplink data information is used for specific description. When time domain resources corresponding to a plurality of pieces of uplink control information overlap a time domain resource corresponding to one piece of uplink data information or time domain resources corresponding to a plurality of pieces of uplink data information overlap a time domain resource corresponding to one piece of uplink control information, a processing method is similar to that for the case in which a time domain resource corresponding to one piece of uplink control information overlaps with a time domain resource corresponding to one piece of uplink data information, and details are not described herein again.

In the process of specifically implementing step 602, optionally, the first information includes some or all of the uplink control information. Optionally, the first information includes some or all of the uplink data information. Optionally, the first information includes some or all of the uplink control information and some or all of the uplink data information. Optionally, content of the first information is predefined. Optionally, the content of the first information is determined by the user equipment by receiving content indication information that is of the first information and that is sent by the base station. Further optionally, the base station notifies the user equipment of the indication information of the first information by using RRC signaling, MAC signaling, physical layer signaling, or the like. The RRC signaling, the MAC signaling, or the physical layer signaling may be carried on the same carrier as the time domain resource, or may be carried on other carrier.

In the process of specifically implementing step 602, optionally, because the overlapping time domain resource may be part of the time domain resource corresponding to the uplink control information, some of the uplink control information may mean that the first information includes the some information in the all information of the uplink control information.

In the process of specifically implementing step 602, optionally, because the overlapping time domain resource may be part of the time domain resource corresponding to the uplink data information, some of the uplink data information may mean that the first information includes the some information in the all information of the uplink data information.

It should be noted that the uplink control information includes at least one of hybrid automatic repeat request information, channel state information, and scheduling request information. The hybrid automatic repeat request information is reply information of a downlink data packet received by the user equipment, the scheduling request information is information for requesting an uplink transmission resource from the base station, and the channel state information is information that is about a downlink channel state of the user equipment and that is reported to the base station. In the process of specifically implementing step 602, optionally, when the uplink control information includes at least two of the hybrid automatic repeat request information, the channel state information, and the scheduling request information, some of the uplink control information may be that the uplink control information does not include at least one of the foregoing at least two types of information. Generally, when the uplink control information includes at least two of the foregoing three types of information, it may be considered that a priority of the hybrid automatic repeat request information and/or a priority of the scheduling request information are/is higher than that of the channel state information. Optionally, when the uplink control information includes at least one of the hybrid automatic repeat request information or the scheduling request information and the channel state information, some of the uplink control information may be other information than the channel state information in the uplink control information.

In this embodiment of the present invention, optionally, there are specifically the following several cases based on different content of the first information:

First case: The first information includes the second information, that is, the first information includes some or all of the uplink control information.

That is, the user equipment does not transmit the uplink data information on the overlapping time domain resource between the time domain resource corresponding to the uplink data information and the time domain resource corresponding to the uplink control information, so as to only transmit some or all of the uplink control information on the overlapping time domain resource.

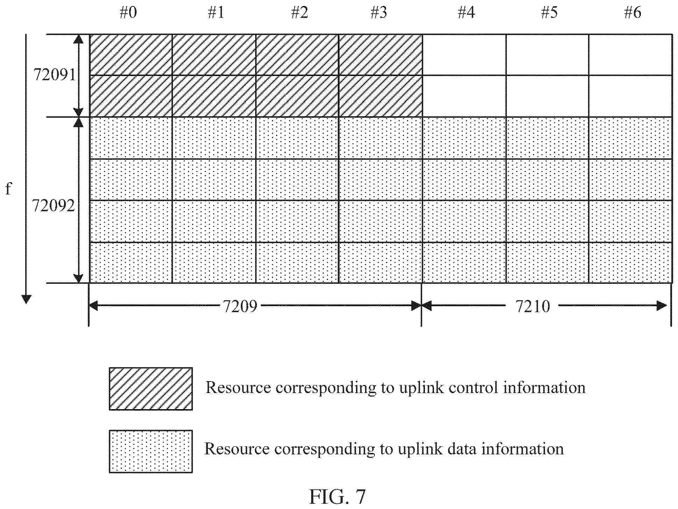

The first case is described below by using FIG. 7 to FIG. 9 as examples.

FIG. 7 is a schematic diagram of overlapping between a time domain resource corresponding to uplink control information and a time domain resource corresponding to uplink data information that are on a same uplink carrier according to an embodiment of the present invention. A length of the time domain resource corresponding to the uplink data information is greater than a length of the time domain resource corresponding to the uplink control information, and the time domain resource corresponding to the uplink data information includes all of the time domain resource corresponding to the uplink control information. As shown in FIG. 7, it is assumed that the length of the time domain resource corresponding to the uplink control information is four symbols that specifically correspond to symbols 0, 1, 2, and 3, and the time domain resource is used to transmit the uplink control information; and the length of the time domain resource corresponding to the uplink data information is seven symbols that specifically correspond to symbols 0 to 6, and the time domain resource is used to transmit the uplink data information. The time domain resource corresponding to the uplink control information overlaps with the time domain resource corresponding to the uplink data information on the symbols 0, 1, 2, and 3. The symbols 0, 1, 2, and 3 on the uplink carrier are indicated by 7209, and the symbols 4, 5, and 6 on the uplink carrier are indicated by 7210. In the example shown in FIG. 7, a resource corresponding to the uplink control information does not overlap a resource corresponding to the uplink data information in a frequency domain.

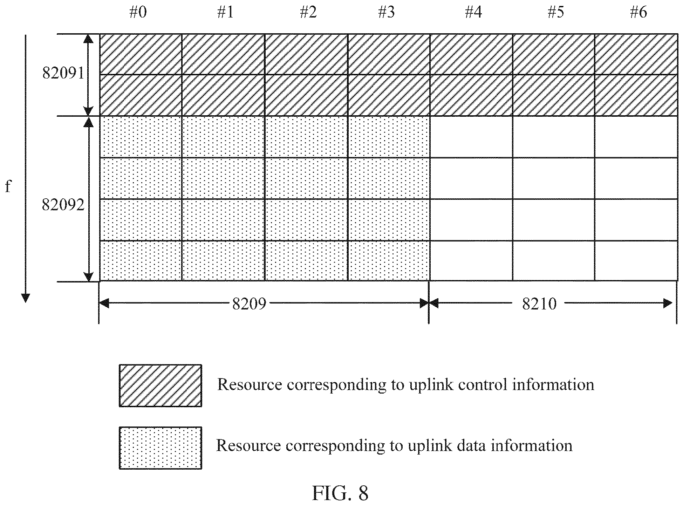

FIG. 8 is a schematic diagram of overlapping between a time domain resource corresponding to uplink control information and a time domain resource corresponding to uplink data information that are on a same uplink carrier according to an embodiment of the present invention. A length of the time domain resource corresponding to the uplink data information is less than a length of the time domain resource corresponding to the uplink control information, and the time domain resource corresponding to the uplink control information includes all of the time domain resource corresponding to the uplink data information. As shown in FIG. 8, it is assumed that the length of the time domain resource corresponding to the uplink data information is four symbols that specifically correspond to symbols 0, 1, 2, and 3, and the time domain resource is used to transmit the uplink data information; and the length of the time domain resource corresponding to the uplink control information is seven symbols that specifically correspond to symbols 0 to 6, and the time domain resource is used to transmit the uplink control information. The time domain resource corresponding to the uplink control information overlaps with the time domain resource corresponding to the uplink data information on the symbols 0, 1, 2, and 3. The symbols 0, 1, 2, and 3 on the uplink carrier are indicated by 8209, and the symbols 4, 5, and 6 on the uplink carrier are indicated by 8210. In the example shown in FIG. 8, a resource corresponding to the uplink control information does not overlap a resource corresponding to the uplink data information in a frequency domain.

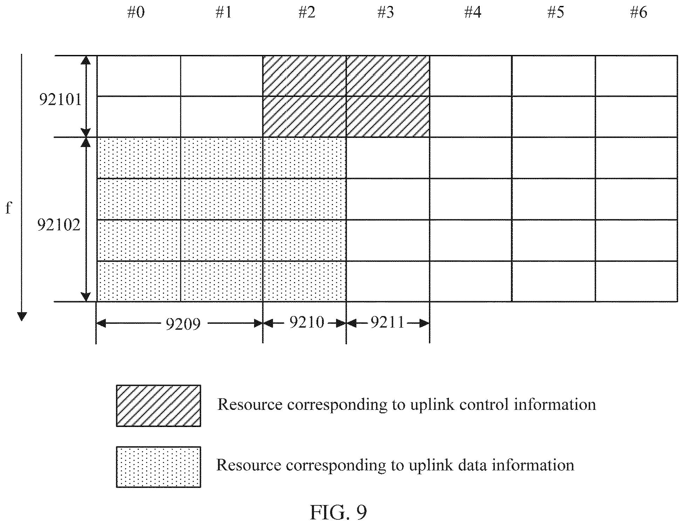

FIG. 9 is a schematic diagram of overlapping between a time domain resource corresponding to uplink control information and a time domain resource corresponding to uplink data information that are on a same uplink carrier according to an embodiment of the present invention. A length of the time domain resource corresponding to the uplink data information is greater than a length of the time domain resource corresponding to the uplink control information, and the time domain resource corresponding to the uplink data information includes some of the time domain resource corresponding to the uplink control information. As shown in FIG. 9, it is assumed that the length of the time domain resource corresponding to the uplink data information is three symbols that specifically correspond to symbols 0, 1, 2, and the time domain resource is used to transmit the uplink data information; and the length of the time domain resource corresponding to the uplink control information is two symbols that specifically correspond to symbols 2 and 3, and the time domain resource is used to transmit the uplink control information. The time domain resource corresponding to the uplink control information overlaps with the time domain resource corresponding to the uplink data information on the symbol 2. The symbols 0 and 1 on the uplink carrier are indicated by 9209, the symbol 2 on the uplink carrier is indicated by 9210, and the symbol 3 on the uplink carrier is indicated by 9211. In the example shown in FIG. 9, a resource corresponding to the uplink control information does not overlap a resource corresponding to the uplink data information in a frequency domain.

The user equipment originally should transmit the uplink control information on the resource corresponding to the uplink control information, and transmit the uplink data information on the resource corresponding to the uplink data information. When the time domain resource corresponding to the uplink control information overlaps with the time domain resource corresponding to the uplink data information, due to a single carrier characteristic of uplink sending of the user equipment, the user equipment may transmit some or all of the uplink control information on the overlapping time domain resource. For example, the user equipment transmits some or all of the uplink control information on the symbol indicated by 7209 in FIG. 7, the symbol indicated by 8209 in FIG. 8, or the symbol indicated by 9210 in FIG. 9.

Optionally, that the user equipment transmits some or all of the uplink control information on the overlapping time domain resource may be that the user equipment transmits some or all of the uplink control information on the overlapping time domain resource in the resource corresponding to the uplink control information. For example, the user equipment transmits some or all of the uplink control information on a resource indicated by 72091 in FIG. 7, a resource indicated by 82091 in FIG. 8, or a resource indicated by 92101 in FIG. 9. In this embodiment, optionally, the user equipment transmits the uplink control information on the resource corresponding to the uplink control information by using an original format of transmitting the uplink control information.

Optionally, that the user equipment transmits some or all of the uplink control information on the overlapping time domain resource may be that the user equipment transmits some or all of the uplink control information on the overlapping time domain resource in the resource corresponding to the uplink data information. For example, the user equipment transmits some or all of the uplink control information on a resource indicated by 72092 in FIG. 7, a resource indicated by 82092 in FIG. 8, or a resource indicated by 92102 in FIG. 9. Further optionally, the user equipment transmits some or all of the uplink control information on the overlapping time domain resource in the resource corresponding to the uplink data information by using a format of transmitting the uplink control information on a PUCCH.

In FIG. 7, 72091 is a 2*4 area in the upper left corner, and 72092 is a 4*4 area in the lower left corner.

In FIG. 8, 82091 is a 2*4 area in the upper left corner, and 82092 is a 4*4 area in the lower left corner.

In FIG. 9, 92101 is a 2*1 area in the upper part of the symbol 2, and 92102 is a 4*1 area in the lower part of the symbol 2.

It should be noted that usually, content included in the uplink data information is more than content included in the uplink control information. Therefore, a frequency domain resource allocated to a user for transmitting the uplink data information is also greater than a frequency domain resource allocated to the user for transmitting the uplink control information. For example, a frequency domain resource corresponding to the uplink control information is two PRBs, and a frequency domain resource corresponding to the uplink data information is four PRBs. Optionally, the user equipment transmits some or all of the uplink control information on a predefined resource in the overlapping time domain resource in the resource corresponding to the uplink data information. For example, the user equipment transmits some or all of the uplink control information on predefined two PRBs in the four PRBs corresponding to the uplink data information. Optionally, the user equipment repeatedly transmits some or all of the uplink control information on the overlapping time domain resource in the resource corresponding to the uplink data information. For example, the user equipment repeatedly transmits some or all of the uplink control information on every two PRBs in the four PRBs corresponding to the uplink data information. Optionally, the user equipment transmits, by using a same modulation scheme as that of the uplink data information, some or all of the uplink control information on the overlapping time domain resource in the resource corresponding to the uplink data information.

Optionally, a receive side demodulates the uplink control information by using a reference signal used to demodulate the uplink data information. Optionally, in addition to transmitting some or all of the uplink control information, the user equipment further transmits the reference signal on the overlapping time domain resource in the resource corresponding to the uplink data information. Optionally, the receive side demodulates the uplink control information or the uplink data information by using the reference signal.

Optionally, the user equipment transmits some or all of the uplink data information on a time domain resource other than the overlapping time domain resource in the time resource corresponding to the uplink data information. The user equipment does not transmit the uplink data information on the overlapping time domain resource, for example, on the symbol indicated by 7209 in FIG. 7, the symbol indicated by 8209 in FIG. 8, or the symbol indicated by 9210 in FIG. 9. Optionally, the user equipment does not transmit the uplink data information on the time domain resource corresponding to the uplink data information. For example, in a case shown in FIG. 8, the user equipment discards an uplink data packet originally planned to be transmitted on 82092.

In the method in this embodiment of the present invention, the user equipment only transmits some or all of the uplink control information on the overlapping time domain resource, so that it can be ensured that the uplink control information having a relatively high priority is transmitted.

Second case: The first information includes the third information, that is, the first information includes some or all of the uplink data information.

That is, the user equipment does not transmit the uplink control information on the overlapping time domain resource between the time domain resource corresponding to the uplink data information and the time domain resource corresponding to the uplink control information, so as to only transmit some or all of the uplink data information on the overlapping time domain resource.

FIG. 7, FIG. 8, and FIG. 9 are still used as examples for description. The user equipment transmits some or all of the uplink data information on the symbol indicated by 7209 in FIG. 7, the symbol indicated by 8209 in FIG. 8, or the symbol indicated by 9210 in FIG. 9. Optionally, the user equipment transmits some or all of the uplink data information on the overlapping time domain resource in the resource corresponding to the uplink data information. For example, the user equipment transmits some or all of the uplink data information on a resource indicated by 72092 in FIG. 7, a resource indicated by 82092 in FIG. 8, or a resource indicated by 92102 in FIG. 9. Optionally, the user equipment transmits some or all of the uplink data information on the overlapping time domain resource in the resource corresponding to the uplink control information. For example, the user equipment transmits some or all of the uplink data information on a resource indicated by 72091 in FIG. 7, a resource indicated by 82091 in FIG. 8, or a resource indicated by 92101 in FIG. 9.

It should be noted that the uplink control information includes at least one of hybrid automatic repeat request information, channel state information, and scheduling request information. The hybrid automatic repeat request information is reply information of a downlink data packet received by the user equipment, the scheduling request information is information for requesting an uplink transmission resource from the base station, and the channel state information is information that is about a downlink channel state of the user equipment and that is reported to the base station. Generally, when the uplink control information includes at least two of the foregoing three types of information, it may be considered that a priority of the hybrid automatic repeat request information and/or a priority of the scheduling request information are/is higher than that of the channel state information. Optionally, the user equipment only transmits some or all of the uplink data information on the overlapping time domain resource between the time domain resource corresponding to the uplink data information and the time domain resource corresponding to the uplink control information. The uplink control information includes the channel state information and does not include the hybrid automatic repeat request information and the scheduling request information.

Optionally, the user equipment transmits some or all of the uplink control information on a time domain resource other than the overlapping time domain resource in the time resource corresponding to the uplink control information. The user equipment does not transmit the uplink control information on the overlapping time domain resource, for example, on the symbol indicated by 7209 in FIG. 7, the symbol indicated by 8209 in FIG. 8, or the symbol indicated by 9210 in FIG. 9. Optionally, the user equipment does not transmit the uplink control information on the time domain resource corresponding to the uplink control information. For example, in a case shown in FIG. 7, the user equipment discards the uplink control information originally planned to be transmitted on 72091.

In the method in this embodiment of the present invention, the user equipment only transmits some or all of the uplink data information on the overlapping time domain resource, so that demodulation performance of the uplink data information can be ensured.

Third case: The first information includes the second information and the third information, that is, the first information includes some or all of the uplink control information and some or all of the uplink data information.

That is, the user equipment transmits some or all of the uplink control information and some or all of the uplink data information on the overlapping time domain resource between the time domain resource corresponding to the uplink control information and the time domain resource corresponding to the uplink data information.

FIG. 7, FIG. 8, and FIG. 9 are still used as examples for description. The user equipment originally should transmit the uplink control information on the resource corresponding to the uplink control information, and transmit the uplink data information on the resource corresponding to the uplink data information. When the time domain resource corresponding to the uplink control information overlaps with the time domain resource corresponding to the uplink data information, the user equipment may transmit the first information on the overlapping time domain resource. For example, the user equipment transmits some or all of the uplink control information and some or all of the uplink data information on the symbol indicated by 7209 in FIG. 7, the symbol indicated by 8209 in FIG. 8, or the symbol indicated by 9210 in FIG. 9.

Optionally, that the user equipment transmits the first information on the overlapping time domain resource may be that the user equipment transmits some or all of the uplink control information and some or all of the uplink data information on the overlapping time domain resource in the resource corresponding to the uplink control information. For example, the user equipment transmits some or all of the uplink control information and some or all of the uplink data information on a resource indicated by 72091 in FIG. 7, a resource indicated by 82091 in FIG. 8, or a resource indicated by 92101 in FIG. 9.

Optionally, that the user equipment transmits the first information on the overlapping time domain resource may be that the user equipment transmits some or all of the uplink control information and some or all of the uplink data information on the overlapping time domain resource in the resource corresponding to the uplink data information. For example, the user equipment transmits some or all of the uplink control information and some or all of the uplink data information on a resource indicated by 72092 in FIG. 7, a resource indicated by 82092 in FIG. 8, or a resource indicated by 92102 in FIG. 9.

Optionally, that the user equipment transmits the first information on the overlapping time domain resource may be that the user equipment transmits some or all of the uplink control information on the overlapping time domain resource in the resource corresponding to the uplink control information, and transmits some or all of the uplink data information on the overlapping time domain resource in the resource corresponding to the uplink data information. For example, the user equipment transmits some or all of the uplink control information on a resource indicated by 72091 in FIG. 7, a resource indicated by 82091 in FIG. 8, or a resource indicated by 92101 in FIG. 9; and transmits some or all of the uplink data information on a resource indicated by 72092 in FIG. 7, a resource indicated by 82092 in FIG. 8, or a resource indicated by 92102 in FIG. 9.

Optionally, the user equipment separately encodes the second information in the first information and the third information in the first information, and then transmits the second information and the third information on the overlapping time domain resource in the resource corresponding to the uplink data information. Further optionally, the uplink control information and the uplink data information occupy different time domain resources, and/or frequency domain resources, and/or space domain resources, and/or code domain resources.

Optionally, the user equipment performs joint encoding on the second information in the first information and the third information in the first information, and then transmits the second information and the third information on the overlapping time domain resource in the resource corresponding to the uplink data information.

Optionally, to maintain the uplink single carrier characteristic, a same modulation scheme is used for the second information in the first information and the third information in the first information.

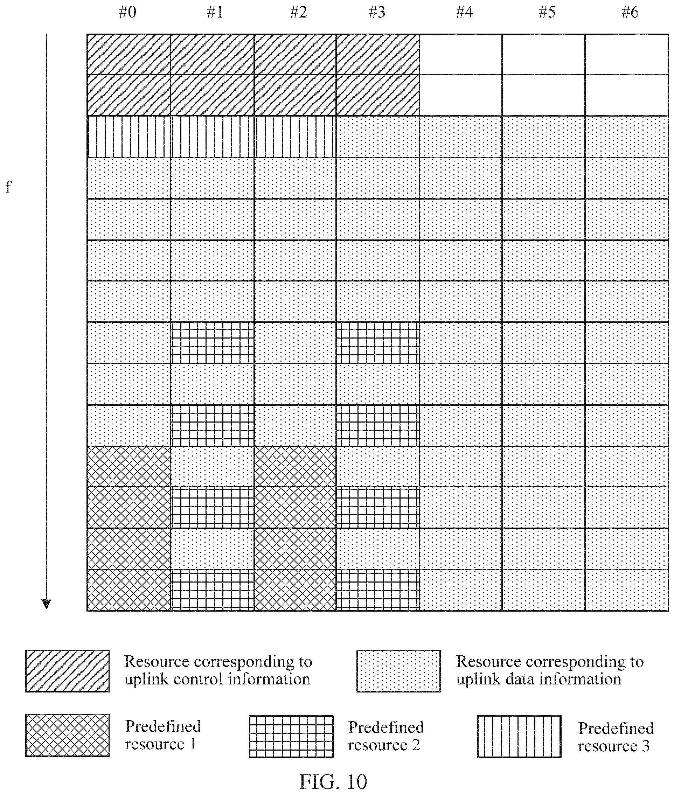

Optionally, that the user equipment transmits the first information on the overlapping time domain resource in the resource corresponding to the uplink data information may be that the user equipment transmits the second information in the first information on a predefined resource in the overlapping time domain resource in the resource corresponding to the uplink data information. Optionally, a time domain location in which the predefined resource is located is determined according to a HARQ feedback time sequence. FIG. 10 is used below for description.

FIG. 10 is a schematic diagram of overlapping between a time domain resource corresponding to uplink control information and a time domain resource corresponding to uplink data information that are on a same uplink carrier according to an embodiment of the present invention.

As shown in FIG. 10, it is assumed that a length of the time domain resource corresponding to the uplink control information is four symbols that specifically correspond to symbols 0, 1, 2, and 3, and the time domain resource is used to transmit the uplink control information; and a length of the time domain resource corresponding to the uplink data information is seven symbols that specifically correspond to symbols 0 to 6, and the time domain resource is used to transmit the uplink data information. The time domain resource corresponding to the uplink control information overlaps with the time domain resource corresponding to the uplink data information on the symbols 0, 1, 2, and 3. A resource corresponding to the uplink control information does not overlap a resource corresponding to the uplink data information in a frequency domain. According to a HARQ feedback time sequence, HARQ-ACK information should be transmitted on the time domain resource corresponding to the uplink control information. Therefore, optionally, a location of a predefined resource may be on at least one of the symbols 0, 1, 2, and 3 in a time domain, and may be on the last RB or last several RBs in the resource corresponding to the uplink data information in the frequency domain. The predefined resource may be continuously distributed in the frequency domain, for example, a predefined resource 1 in FIG. 10; or may be discretely distributed, for example, a predefined resource 2 in FIG. 10. The location of the predefined resource may alternatively be on the first RB or first several RBs in the resource corresponding to the uplink data information in the frequency domain, for example, a predefined resource 3 in FIG. 10.

Optionally, the user equipment does not transmit the third information in the first information on the predefined resource in the overlapping time domain resource in the resource corresponding to the uplink data information, and transmits uplink third information in the first information on a resource other than the predefined resource in the overlapping time domain resource in the resource corresponding to the uplink data information, that is, the second information in the first information and the third information in the first information occupy different time-frequency resources. Optionally, the user equipment may transmit the second information in the first information on the predefined resource in a manner of puncturing or rate matching.

Optionally, a receive side demodulates the uplink control information by using a reference signal used to demodulate the uplink data information. Optionally, in addition to transmitting the first information, the user equipment further transmits the reference signal on the overlapping time domain resource in the resource corresponding to the uplink data information. Optionally, the receive side demodulates the uplink control information or the uplink data information by using the reference signal.

In the process of specifically implementing step 602, optionally, a manner of transmitting the first information on the overlapping time domain resource includes at least one of repetition, frequency division multiplexing, time division multiplexing, code division multiplexing, puncturing, rate matching, joint encoding, and the like. Optionally, a manner of transmitting the first information on the overlapping time domain resource is predefined. Optionally, a manner of transmitting the first information on the overlapping time domain resource is determined by the user equipment by receiving indication information that is sent by the base station and that is of the manner of transmitting the first information on the overlapping time domain resource. Further optionally, the base station notifies, by using RRC signaling, MAC signaling, physical layer signaling, or the like, the user equipment of the indication information of the manner of transmitting the first information on the overlapping time domain resource. The RRC signaling, the MAC signaling, or the physical layer signaling may be carried on the same carrier as the time domain resource, or may be carried on other carrier.

In the method in this embodiment of the present invention, the user equipment transmits some or all of the uplink control information and some or all of the uplink data information on the overlapping time domain resource in a multiplexing manner, so that it can be ensured that the uplink control information having a relatively high priority is transmitted when demodulation performance of the uplink data information is relatively little affected.

In this embodiment of the present invention, in the first case, the user equipment only transmits some or all of the uplink control information on the overlapping time domain resource, so that it can be ensured that the uplink control information having a relatively high priority is transmitted. In the second case, the user equipment only transmits some or all of the uplink data information on the overlapping time domain resource, so that the demodulation performance of the uplink data information can be ensured. In the third case, some or all of the uplink control information and some or all of the uplink data information are transmitted on the overlapping time domain resource in the multiplexing manner, so that it can be ensured that the uplink control information having a relatively high priority is transmitted when the demodulation performance of the uplink data information is relatively little affected.

### Embodiment 2

The foregoing method in the present invention is mainly described as being applied to a user equipment side, user equipment transmits first information, and a base station receives the first information. Therefore, the present invention further provides an uplink control information transmission method. The uplink control information transmission method is applied to a base station side.

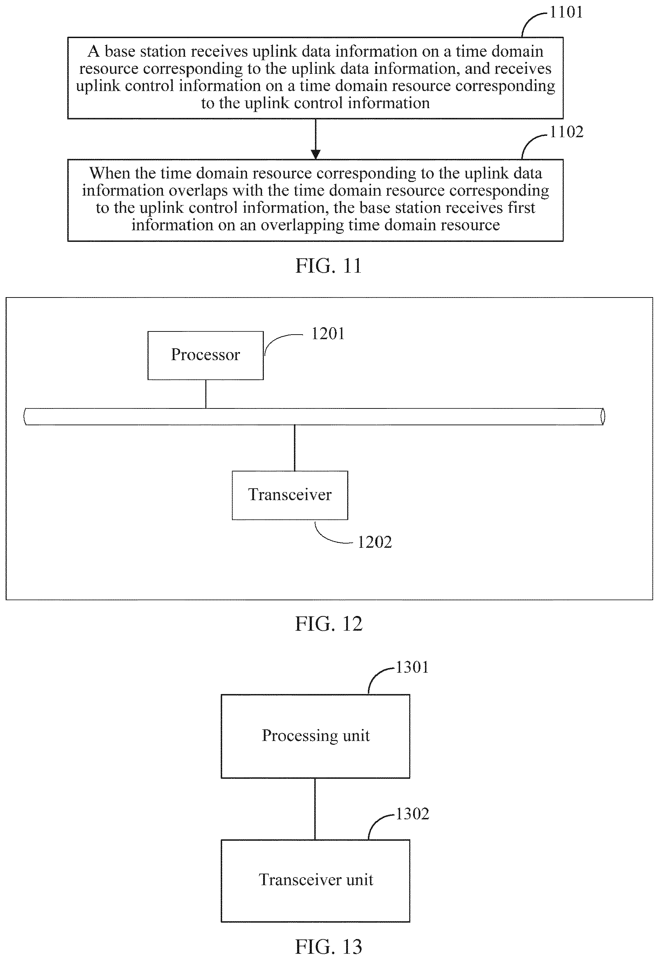

FIG. 11 is a flowchart of an uplink information transmission method according to this embodiment of the present invention. As shown in FIG. 11, the method includes the following steps.

Step 1101: A base station receives uplink data information on a time domain resource corresponding to the uplink data information, and receives uplink control information on a time domain resource corresponding to the uplink control information.

A length of the time domain resource corresponding to the uplink data information is not equal to a length of the time domain resource corresponding to the uplink control information, and the uplink control information includes at least one of hybrid automatic repeat request information, channel state information, and scheduling request information.

Step 1102: When the time domain resource corresponding to the uplink data information overlaps with the time domain resource corresponding to the uplink control information, the base station receives first information on an overlapping time domain resource.

The first information includes at least one of second information and third information.

The second information includes some information in the uplink control information or all information in the uplink control information, and the third information includes some information in the uplink data information or all information in the uplink data information.

It should be noted that there is no necessary chronological order of receiving the uplink control information and the uplink data information by the base station.

It should be noted that in the method provided in this embodiment of the present invention, content included in the uplink control information, the length of the time domain resource corresponding to the uplink control information, a method for determining the length of the time domain resource corresponding to the uplink control information, and the like are the same as the content included in the uplink control information, the length of the time domain resource corresponding to the uplink control information, a method for determining the length of the time domain resource corresponding to the uplink control information, and the like that are described in Embodiment 1 of the present invention, and details are not described herein again.

It should be noted that in the method provided in this embodiment of the present invention, content included in the uplink data information, the length of the time domain resource corresponding to the uplink data information, a method for determining the length of the time domain resource corresponding to the uplink data information, and the like are the same as the content included in the uplink data information, the length of the time domain resource corresponding to the uplink data information, a method for determining the length of the time domain resource corresponding to the uplink data information, and the like that are described in Embodiment 1 of the present invention, and details are not described herein again.

It should be noted that a relationship between the length of the time domain resource corresponding to the uplink control information and the length of the time domain resource corresponding to the uplink data information is the same as a relationship between the length of the time domain resource corresponding to the uplink control information and the length of the time domain resource corresponding to the uplink data information described in Embodiment 1 of the present invention, and details are not described herein again.

It should be noted that in the method provided in this embodiment of the present invention, methods for determining included content, a representation form, a carrier resource, and a sending manner of the first information are the same as methods for determining included content, a representation form, a carrier resource, and a sending manner of the first information that are described in Embodiment 1 of the present invention, and details are not described herein again.

In this embodiment, there are also three cases based on different content of the first information.
First case: The first information includes the second information, that is, the first information includes some or all of the uplink control information.
Second case: The first information includes the third information, that is, the first information includes some or all of the uplink data information.
Third case: The first information includes the second information and the third information, that is, the first information includes some or all of the uplink control information and some or all of the uplink data information.

In the first case, the base station does not receive the uplink data information on the overlapping time domain resource between the time domain resource corresponding to the uplink data information and the time domain resource corresponding to the uplink control information, so as to only receive some or all of the uplink control information on the overlapping time domain resource.

The first case is specifically described below by using FIG. 7 to FIG. 9 as examples.

FIG. 7 is a schematic diagram of overlapping between a time domain resource corresponding to uplink control information and a time domain resource corresponding to uplink data information that are on a same uplink carrier according to an embodiment of the present invention. A length of the time domain resource corresponding to the uplink data information is greater than a length of the time domain resource corresponding to the uplink control information, and the time domain resource corresponding to the uplink data information includes all of the time domain resource corresponding to the uplink control information. As shown in FIG. 7, it is assumed that the length of the time domain resource corresponding to the uplink control information is four symbols that specifically correspond to symbols 0, 1, 2, and 3, and the time domain resource is used to transmit the uplink control information; and the length of the time domain resource corresponding to the uplink data information is seven symbols that specifically correspond to symbols 0 to 6, and the time domain resource is used to transmit the uplink data information. The time domain resource corresponding to the uplink control information overlaps with the time domain resource corresponding to the uplink data information on the symbols 0, 1, 2, and 3. The symbols 0, 1, 2, and 3 on the uplink carrier are indicated by 7209, and the symbols 4, 5, and 6 on the uplink carrier are indicated by 7210. In the example shown in FIG. 7, a resource corresponding to the uplink control information does not overlap a resource corresponding to the uplink data information in a frequency domain.

FIG. 8 is a schematic diagram of overlapping between a time domain resource corresponding to uplink control information and a time domain resource corresponding to uplink data information that are on a same uplink carrier according to an embodiment of the present invention. A length of the time domain resource corresponding to the uplink data information is less than a length of the time domain resource corresponding to the uplink control information, and the time domain resource corresponding to the uplink control information includes all of the time domain resource corresponding to the uplink data information. As shown in FIG. 8, it is assumed that the length of the time domain resource corresponding to the uplink data information is four symbols that specifically correspond to symbols 0, 1, 2, and 3, and the time domain resource is used to transmit the uplink data information; and the length of the time domain resource corresponding to the uplink control information is seven symbols that specifically correspond to symbols 0 to 6, and the time domain resource is used to transmit the uplink control information. The time domain resource corresponding to the uplink control information overlaps with the time domain resource corresponding to the uplink data information on the symbols 0, 1, 2, and 3. The symbols 0, 1, 2, and 3 on the uplink carrier are indicated by 8209, and the symbols 4, 5, and 6 on the uplink carrier are indicated by 8210. In the example shown in FIG. 8, a resource corresponding to the uplink control information does not overlap a resource corresponding to the uplink data information in a frequency domain.

FIG. 9 is a schematic diagram of overlapping between a time domain resource corresponding to uplink control information and a time domain resource corresponding to uplink data information that are on a same uplink carrier according to an embodiment of the present invention. A length of the time domain resource corresponding to the uplink data information is greater than a length of the time domain resource corresponding to the uplink control information, and the time domain resource corresponding to the uplink data information includes some of the time domain resource corresponding to the uplink control information. As shown in FIG. 9, it is assumed that the length of the time domain resource corresponding to the uplink data information is three symbols that specifically correspond to symbols 0, 1, 2, and the time domain resource is used to transmit the uplink data information; and the length of the time domain resource corresponding to the uplink control information is two symbols that specifically correspond to symbols 2 and 3, and the time domain resource is used to transmit the uplink control information. The time domain resource corresponding to the uplink control information overlaps with the time domain resource corresponding to the uplink data information on the symbol 2. The symbols 0 and 1 on the uplink carrier are indicated by 9209, the symbol 2 on the uplink carrier is indicated by 9210, and the symbol 3 on the uplink carrier is indicated by 9211. In the example shown in FIG. 9, a resource corresponding to the uplink control information does not overlap a resource corresponding to the uplink data information in a frequency domain.

The base station originally should receive the uplink control information on a resource corresponding to the uplink control information, and receive the uplink data information on a resource corresponding to the uplink data information. When the time domain resource corresponding to the uplink control information overlaps with the time domain resource corresponding to the uplink data information, due to a single carrier characteristic of uplink sending of user equipment, the user equipment may transmit some or all of the uplink control information on the overlapping time domain resource. Similarly, the base station may receive some or all of the uplink control information on the overlapping time domain resource. For example, the base station receives some or all of the uplink control information on the symbol indicated by 7209 in FIG. 7, the symbol indicated by 8209 in FIG. 8, or the symbol indicated by 9210 in FIG. 9.

Optionally, that the base station receives some or all of the uplink control information on the overlapping time domain resource may be that the base station receives some or all of the uplink control information on the overlapping time domain resource in the resource corresponding to the uplink control information. For example, the base station receives some or all of the uplink control information on a resource indicated by 72091 in FIG. 7, a resource indicated by 82091 in FIG. 8, or a resource indicated by 92101 in FIG. 9. In this embodiment, optionally, the base station receives the uplink control information on the resource corresponding to the uplink control information by using an original format of the uplink control information.

Optionally, that the base station receives some or all of the uplink control information on the overlapping time domain resource may be that the base station receives some or all of the uplink control information on the overlapping time domain resource in the resource corresponding to the uplink data information. For example, the base station receives some or all of the uplink control information on a resource indicated by 72092 in FIG. 7, a resource indicated by 82092 in FIG. 8, or a resource indicated by 92102 in FIG. 9. Further optionally, the base station receives some or all of the uplink control information on the overlapping time domain resource in the resource corresponding to the uplink data information by using a transmission format corresponding to a PUCCH.

In FIG. 7, 72091 is a 2*4 area in the upper left corner, and 72092 is a 4*4 area in the lower left corner.

In FIG. 8, 82091 is a 2*4 area in the upper left corner, and 82092 is a 4*4 area in the lower left corner.

In FIG. 9, 92101 is a 2*1 area in the upper part of the symbol 2, and 92102 is a 4*1 area in the lower part of the symbol 2.

In the method in this embodiment of the present invention, the user equipment only transmits some or all of the uplink control information on the overlapping time domain resource. Correspondingly, the base station only receives some or all of the uplink control information on the overlapping time domain resource, so that it can be ensured that the uplink control information having a relatively high priority is transmitted.

In the second case, the base station does not receive the uplink control information on the overlapping time domain resource between the time domain resource corresponding to the uplink data information and the time domain resource corresponding to the uplink control information, so as to only receive some or all of the uplink data information on the overlapping time domain resource.

FIG. 7, FIG. 8, and FIG. 9 are still used as examples for description. The base station receives some or all of the uplink data information on the symbol indicated by 7209 in FIG. 7, the symbol indicated by 8209 in FIG. 8, or the symbol indicated by 9210 in FIG. 9. Optionally, the base station receives some or all of the uplink data information on the overlapping time domain resource in the resource corresponding to the uplink data information. For example, the base station receives some or all of the uplink data information on a resource indicated by 72092 in FIG. 7, a resource indicated by 82092 in FIG. 8, or a resource indicated by 92102 in FIG. 9. Optionally, the base station receives some or all of the uplink data information on the overlapping time domain resource in the resource corresponding to the uplink control information. For example, the base station receives some or all of the uplink data information on a resource indicated by 72091 in FIG. 7, a resource indicated by 82091 in FIG. 8, or a resource indicated by 92101 in FIG. 9.

It should be noted that the uplink control information includes at least one of hybrid automatic repeat request information, channel state information, and scheduling request information. The hybrid automatic repeat request information is reply information of a downlink data packet received by the user equipment, the scheduling request information is information for requesting an uplink transmission resource from the base station, and the channel state information is information that is about a downlink channel state of the user equipment and that is reported to the base station. Generally, when the uplink control information includes at least two of the foregoing three types of information, it may be considered that a priority of the hybrid automatic repeat request information and/or a priority of the scheduling request information are/is higher than that of the channel state information. Optionally, the user equipment only transmits some or all of the uplink data information on the overlapping time domain resource between the time domain resource corresponding to the uplink data information and the time domain resource corresponding to the uplink control information. Correspondingly, the base station only receives some or all of the uplink data information on the overlapping time domain resource between the time domain resource corresponding to the uplink data information and the time domain resource corresponding to the uplink control information. The uplink control information includes the channel state information and does not include the hybrid automatic repeat request information and the scheduling request information.

In the method in this embodiment of the present invention, the user equipment only transmits some or all of the uplink data information on the overlapping time domain resource. Correspondingly, the base station only receives some or all of the uplink data information on the overlapping time domain resource, so that demodulation performance of the uplink data information can be ensured.

In the third case, the base station receives some or all of the uplink control information and some or all of the uplink data information on the overlapping time domain resource between the time domain resource corresponding to the uplink control information and the time domain resource corresponding to the uplink data information.

FIG. 7, FIG. 8, and FIG. 9 are still used as examples for description. The base station originally should receive the uplink control information on the resource corresponding to the uplink control information, and receive the uplink data information on the resource corresponding to the uplink data information. When the time domain resource corresponding to the uplink control information overlaps with the time domain resource corresponding to the uplink data information, the base station may receive the first information on the overlapping time domain resource. For example, the base station receives some or all of the uplink control information and some or all of the uplink data information on the symbol indicated by 7209 in FIG. 7, the symbol indicated by 8209 in FIG. 8, or the symbol indicated by 9210 in FIG. 9.

Optionally, that the base station receives the first information on the overlapping time domain resource may be that the base station receives the first information on the overlapping time domain resource in the resource corresponding to the uplink control information. For example, the base station receives some or all of the uplink control information and some or all of the uplink data information on a resource indicated by 72091 in FIG. 7, a resource indicated by 82091 in FIG. 8, or a resource indicated by 92101 in FIG. 9.

Optionally, that the base station receives the first information on the overlapping time domain resource may be that the base station receives the first information on the overlapping time domain resource in the resource corresponding to the uplink data information. For example, the base station receives some or all of the uplink control information and some or all of the uplink data information on a resource indicated by 72092 in FIG. 7, a resource indicated by 82092 in FIG. 8, or a resource indicated by 92102 in FIG. 9.

Optionally, that the base station receives the first information on the overlapping time domain resource may be that the base station receives some or all of the uplink control information on the overlapping time domain resource in the resource corresponding to the uplink control information, and receives some or all of the uplink data information on the overlapping time domain resource in the resource corresponding to the uplink data information. For example, the base station receives some or all of the uplink control information on a resource indicated by 72091 in FIG. 7, a resource indicated by 82091 in FIG. 8, or a resource indicated by 92101 in FIG. 9; and receives some or all of the uplink data information on a resource indicated by 72092 in FIG. 7, a resource indicated by 82092 in FIG. 8, or a resource indicated by 92102 in FIG. 9.

Optionally, the user equipment separately encodes the second information in the first information and the third information in the first information, and then transmits the second information and the third information on the overlapping time domain resource in the resource corresponding to the uplink data information. Correspondingly, the base station separately receives the second information in the first information and the third information in the first information on the overlapping time domain resource in the resource corresponding to the uplink data information. Further optionally, the uplink control information and the uplink data information occupy different time domain resources, and/or frequency domain resources, and/or space domain resources, and/or code domain resources.

Optionally, the user equipment performs joint encoding on the second information in the first information and the third information in the first information, and then transmits the second information and the third information on the overlapping time domain resource in the resource corresponding to the uplink data information. The base station receives information obtained through the joint encoding.

Optionally, to maintain an uplink single carrier characteristic, a same modulation scheme is used for the second information in the first information and the third information in the first information. Correspondingly, the base station demodulates the second information in the first information and the third information in the first information by using the same modulation scheme.

Optionally, that the base station receives the first information on the overlapping time domain resource in the resource corresponding to the uplink data information may be that the base station receives the second information in the first information on a predefined resource in the overlapping time domain resource in the resource corresponding to the uplink data information. Optionally, a time domain location in which the predefined resource is located is determined according to a HARQ feedback time sequence. FIG. 10 is used below for description.

As shown in FIG. 10, it is assumed that the length of the time domain resource corresponding to the uplink control information is four symbols that specifically correspond to symbols 0, 1, 2, and 3, and the time domain resource is used to transmit the uplink control information; and the length of the time domain resource corresponding to the uplink data information is seven symbols that specifically correspond to symbols 0 to 6, and the time domain resource is used to transmit the uplink data information. The time domain resource corresponding to the uplink control information overlaps with the time domain resource corresponding to the uplink data information on the symbols 0, 1, 2, and 3. The resource corresponding to the uplink control information does not overlap the resource corresponding to the uplink data information in a frequency domain. According to a HARQ feedback time sequence, HARQ-ACK information should be transmitted on the time domain resource corresponding to the uplink control information. Therefore, optionally, the location of the predefined resource may be on at least one of the symbols 0, 1, 2, and 3 in a time domain, and may be on the last RB or last several RBs in the resource corresponding to the uplink data information in the frequency domain. The predefined resource may be continuously distributed in the frequency domain, for example, a predefined resource 1 in FIG. 10, or may be discretely distributed, for example, a predefined resource 2 in FIG. 10. The location of the predefined resource may alternatively be on the first RB or first several RBs in the resource corresponding to the uplink data information in the frequency domain, for example, a predefined resource 3 in FIG. 10.

Optionally, the base station does not receive the third information in the first information on the predefined resource in the overlapping time domain resource in the resource corresponding to the uplink data information, and receives the third information in the first information on a resource other than the predefined resource in the overlapping time domain resource in the resource corresponding to the uplink data information, that is, the second information in the first information and the third information in the first information occupy different time-frequency resources. Optionally, the user equipment may transmit the second information in the first information on the predefined resource in a manner of puncturing or rate matching.

Optionally, the base station demodulates the uplink control information by using a reference signal used to demodulate the uplink data information.

Optionally, in addition to receiving the first information, the base station further receives the reference signal on the overlapping time domain resource in the resource corresponding to the uplink data information. Optionally, the base station demodulates the uplink control information or the uplink data information by using the reference signal.

In the process of specifically implementing step 602, optionally, a manner of transmitting the first information on the overlapping time domain resource includes at least one of repetition, frequency division multiplexing, time division multiplexing, code division multiplexing, puncturing, rate matching, joint encoding, and the like. Optionally, a manner of transmitting the first information on the overlapping time domain resource is predefined. Optionally, a manner of transmitting the first information on the overlapping time domain resource is determined by the user equipment by receiving indication information that is sent by the base station and that is of the manner of transmitting the first information on the overlapping time domain resource. Further optionally, the base station notifies, by using RRC signaling, MAC signaling, physical layer signaling, or the like, the user equipment of the indication information of the manner of transmitting the first information on the overlapping time domain resource. The RRC signaling, the MAC signaling, or the physical layer signaling may be carried on the same carrier as the time domain resource, or may be carried on other carrier.

In the method in this embodiment of the present invention, the user equipment transmits some or all of the uplink control information and some or all of the uplink data information on the overlapping time domain resource in a multiplexing manner. Correspondingly, the base station receives some or all of the uplink control information and some or all of the uplink data information on the overlapping time domain resource, so that it can be ensured that the uplink control information having a relatively high priority is transmitted when demodulation performance of the uplink data information is relatively little affected.

In this embodiment of the present invention, in the first case, only some or all of the uplink control information is transmitted on the overlapping time domain resource, so that it can be ensured that the uplink control information having a relatively high priority is transmitted. In the second case, only some or all of the uplink data information is transmitted on the overlapping time domain resource, so that the demodulation performance of the uplink data information can be ensured. In the third case, some or all of the uplink control information and some or all of the uplink data information are transmitted on the overlapping time domain resource in the multiplexing manner, so that it can be ensured that the uplink control information having a relatively high priority is transmitted when the demodulation performance of the uplink data information is relatively little affected.

### Embodiment 3

Based on a same inventive concept as that of Embodiment 1, this embodiment of the present invention further provides uplink information transmission user equipment. A method corresponding to the uplink information transmission user equipment is the uplink information transmission method in Embodiment 1 of the present invention. Therefore, for implementation of the uplink information transmission user equipment in this embodiment of the present invention, refer to implementation of the method, and repetitions are not described herein again.

FIG. 12 is a schematic diagram of a transmission apparatus according to this embodiment of the present invention. As shown in FIG. 12, the apparatus includes:
a processor 1201, configured to determine uplink data information and uplink control information, where a length of a time domain resource corresponding to the uplink data information is not equal to a length of a time domain resource corresponding to the uplink control information, and the uplink control information includes at least one of hybrid automatic repeat request information, channel state information, and scheduling request information; and
a transceiver 1202, configured to: transmit the uplink data information on the time domain resource corresponding to the uplink data information, transmit the uplink control information on the time domain resource corresponding to the uplink control information, and when the time domain resource corresponding to the uplink data information overlaps with the time domain resource corresponding to the uplink control information, transmit first information on the overlapping time domain resource.

The first information includes at least one of second information and third information. The second information includes some information in the uplink control information or all information in the uplink control information, and the third information includes some information in the uplink data information or all information in the uplink data information.

Optionally, that a length of a time domain resource corresponding to the uplink data information is not equal to a length of a time domain resource corresponding to the uplink control information includes:
the length of the time domain resource corresponding to the uplink data information is greater than the length of the time domain resource corresponding to the uplink control information; or
the length of the time domain resource corresponding to the uplink data information is less than the length of the time domain resource corresponding to the uplink control information.

Optionally, the first information includes the second information, and the transceiver 1202 is further configured to perform at least one of the following operations:
transmitting the second information on the overlapping time domain resource in a resource corresponding to the uplink data information; and
transmitting the second information on the overlapping time domain resource in a resource corresponding to the uplink control information.

Optionally, that the transceiver 1202 transmits the second information on the overlapping time domain resource in the resource corresponding to the uplink data information includes at least one of the following:
transmitting, by using a format corresponding to the uplink control information, the second information on the overlapping time domain resource in the resource corresponding to the uplink data information;
transmitting the second information on a predefined resource in the overlapping time domain resource in the resource corresponding to the uplink data information;
repeatedly transmitting the second information on the overlapping time domain resource in the resource corresponding to the uplink data information; and
transmitting, by using a same modulation scheme as that of the uplink data information, the second information on the overlapping time domain resource in the resource corresponding to the uplink data information.

Optionally, the transceiver 1202 is further configured to:
further transmit a reference signal on the overlapping time domain resource in the resource corresponding to the uplink data information.

Optionally, the first information includes the third information. The uplink control information includes the channel state information and does not include the hybrid automatic repeat request information and the scheduling request information.

Optionally, the first information includes the third information, and the transceiver 1202 is further configured to perform at least one of the following operations:
transmitting the third information on the overlapping time domain resource in a resource corresponding to the uplink data information; and
transmitting the third information on the overlapping time domain resource in a resource corresponding to the uplink control information.

Optionally, the first information includes the second information and the third information, and the transceiver 1202 is further configured to perform at least one of the following operations:
transmitting the first information on the overlapping time domain resource in a resource corresponding to the uplink data information; and
transmitting the first information on the overlapping time domain resource in a resource corresponding to the uplink control information.

Optionally, that the transceiver 1202 transmits the first information on the overlapping time domain resource in the resource corresponding to the uplink data information includes at least one of the following:
transmitting the second information in the first information on a predefined resource in the overlapping time domain resource in the resource corresponding to the uplink data information;
skipping transmitting the third information in the first information on the predefined resource in the overlapping time domain resource in the resource corresponding to the uplink data information;
transmitting the third information in the first information on a resource other than the predefined resource in the overlapping time domain resource in the resource corresponding to the uplink data information;
transmitting the first information on the overlapping time domain resource in the resource corresponding to the uplink data information, where the second information in the first information and the third information in the first information occupy different time-frequency resources; and
transmitting, by using a same modulation scheme, the second information and the third information in the first information on the overlapping time domain resource in the resource corresponding to the uplink data information.

Optionally, the transceiver 1202 is further configured to transmit a reference signal on the overlapping time domain resource in the resource corresponding to the uplink data information.

Optionally, the transceiver 1202 is further configured to receive indication information sent by a base station, and the indication information includes at least one of the following information:
resource allocation information of the time domain resource corresponding to the uplink control information;
resource allocation information of the time domain resource corresponding to the uplink data information;
indication information of the overlapping time domain resource;
indication information of content included in the first information; and
indication information of a manner of transmitting the first information on the overlapping time domain resource.

According to the apparatus in this embodiment of the present invention, a problem of transmitting uplink control information or uplink data information when there are uplink control information and uplink data information that correspond to time domain resources of different lengths and a conflict occurs between the time domain resources corresponding to the uplink control information and the uplink data information can be resolved.

### Embodiment 4

Based on a same inventive concept as that of Embodiment 2, this embodiment of the present invention further provides an uplink information transmission base station. A method corresponding to the uplink information transmission base station is the uplink information transmission method in Embodiment 2 of the present invention. Therefore, for implementation of the uplink information transmission base station in this embodiment of the present invention, refer to implementation of the method, and repetitions are not described herein again.

Corresponding to the foregoing, this embodiment of the present invention further provides an uplink control information transmission apparatus applied to a base station, and the apparatus includes:
a transceiver, configured to: receive uplink data information on a time domain resource corresponding to the uplink data information, and receive uplink control information on a time domain resource corresponding to the uplink control information; and a processor, configured to demodulate the received uplink data information or uplink control information, where a length of the time domain resource corresponding to the uplink data information is not equal to a length of the time domain resource corresponding to the uplink control information, and the uplink control information includes at least one of hybrid automatic repeat request information, channel state information, and scheduling request information.

When the time domain resource corresponding to the uplink data information overlaps with the time domain resource corresponding to the uplink control information, the transceiver is further configured to receive first information on the overlapping time domain resource, and the processor is further configured to demodulate the received first information, where the first information includes at least one of second information and third information.

The second information includes some information in the uplink control information or all information in the uplink control information, and the third information includes some information in the uplink data information or all information in the uplink data information.

Optionally, that a length of the time domain resource corresponding to the uplink data information is not equal to a length of the time domain resource corresponding to the uplink control information includes:
the length of the time domain resource corresponding to the uplink data information is greater than the length of the time domain resource corresponding to the uplink control information; or
the length of the time domain resource corresponding to the uplink data information is less than the length of the time domain resource corresponding to the uplink control information.

Optionally, the first information includes the second information, and the transceiver is further configured to perform at least one of the following operations:
receiving the second information on the overlapping time domain resource in a resource corresponding to the uplink data information; and
receiving the second information on the overlapping time domain resource in a resource corresponding to the uplink control information.

Optionally, that the transceiver receives the second information on the overlapping time domain resource in the resource corresponding to the uplink data information includes at least one of the following:
receiving, by using a format corresponding to the uplink control information, the second information on the overlapping time domain resource in the resource corresponding to the uplink data information;
receiving the second information on a predefined resource in the overlapping time domain resource in the resource corresponding to the uplink data information;
repeatedly receiving the second information on the overlapping time domain resource in the resource corresponding to the uplink data information; and
receiving, by using a same modulation scheme as that of the uplink data information, the second information on the overlapping time domain resource in the resource corresponding to the uplink data information.

Optionally, the transceiver is further configured to receive a reference signal on the overlapping time domain resource in the resource corresponding to the uplink data information.

The processor is further configured to demodulate the second information based on the reference signal.

Optionally, the first information includes the third information. The uplink control information includes the channel state information and does not include the hybrid automatic repeat request information and the scheduling request information.

Optionally, the first information includes the third information, and the transceiver is further configured to perform at least one of the following operations:
receiving the third information on the overlapping time domain resource in a resource corresponding to the uplink data information; and
receiving the third information on the overlapping time domain resource in a resource corresponding to the uplink control information.

Optionally, the first information includes the second information and the third information, and the transceiver is further configured to perform at least one of the following operations:
receiving the first information on the overlapping time domain resource in a resource corresponding to the uplink data information; and
receiving the first information on the overlapping time domain resource in a resource corresponding to the uplink control information.

Optionally, that the transceiver receives the first information on the overlapping time domain resource in the resource corresponding to the uplink data information includes at least one of the following:
receiving the second information in the first information on a predefined resource in the overlapping time domain resource in the resource corresponding to the uplink data information;
receiving the third information in the first information on a resource other than the predefined resource in the overlapping time domain resource in the resource corresponding to the uplink data information;
receiving the first information on the overlapping time domain resource in the resource corresponding to the uplink data information, where the second information in the first information and the third information in the first information occupy different time-frequency resources; and
receiving, by using a same modulation scheme, the second information and the third information in the first information on the overlapping time domain resource in the resource corresponding to the uplink data information.

Optionally, the transceiver is further configured to receive a reference signal on the overlapping time domain resource in the resource corresponding to the uplink data information.

The processor is further configured to demodulate the first information based on the reference signal.

Optionally, the transceiver is further configured to send indication information to user equipment, and the indication information includes at least one of the following information:
resource allocation information of the time domain resource corresponding to the uplink control information;
resource allocation information of the time domain resource corresponding to the uplink data information;
indication information of the overlapping time domain resource;
indication information of content included in the first information; and
indication information of a manner of transmitting the first information on the overlapping time domain resource.

According to the apparatus in this embodiment of the present invention, a problem of transmitting uplink control information or uplink data information when there are uplink control information and uplink data information that correspond to time domain resources of different lengths and a conflict occurs between the time domain resources corresponding to the uplink control information and the uplink data information can be resolved.

### Embodiment 5

Based on a same inventive concept as that of Embodiment 1, this embodiment of the present invention further provides an uplink information transmission apparatus. A method corresponding to the uplink information transmission apparatus is the uplink information transmission method in Embodiment 1 of the present invention. Therefore, for implementation of the uplink information transmission apparatus in this embodiment of the present invention, refer to implementation of the method, and repetitions are not described herein again.

FIG. 13 is a schematic diagram of a transmission apparatus according to this embodiment of the present invention. As shown in FIG. 13, the apparatus includes:
a processing unit 1301, configured to determine uplink data information and uplink control information, where a length of a time domain resource corresponding to the uplink data information is not equal to a length of a time domain resource corresponding to the uplink control information, and the uplink control information includes at least one of hybrid automatic repeat request information, channel state information, and scheduling request information; and
a transceiver unit 1302, configured to: transmit the uplink data information on the time domain resource corresponding to the uplink data information, transmit the uplink control information on the time domain resource corresponding to the uplink control information, and when the time domain resource corresponding to the uplink data information overlaps with the time domain resource corresponding to the uplink control information, transmit first information on the overlapping time domain resource.

The first information includes at least one of second information and third information. The second information includes some information in the uplink control information or all information in the uplink control information, and the third information includes some information in the uplink data information or all information in the uplink data information.

Optionally, that a length of a time domain resource corresponding to the uplink data information is not equal to a length of a time domain resource corresponding to the uplink control information includes:
the length of the time domain resource corresponding to the uplink data information is greater than the length of the time domain resource corresponding to the uplink control information; or
the length of the time domain resource corresponding to the uplink data information is less than the length of the time domain resource corresponding to the uplink control information.

Optionally, the first information includes the second information, and the transceiver unit 1302 is further configured to perform at least one of the following operations:
transmitting the second information on the overlapping time domain resource in a resource corresponding to the uplink data information; and
transmitting the second information on the overlapping time domain resource in a resource corresponding to the uplink control information.

Optionally, that the transceiver unit 1302 transmits the second information on the overlapping time domain resource in the resource corresponding to the uplink data information includes at least one of the following:
transmitting, by using a format corresponding to the uplink control information, the second information on the overlapping time domain resource in the resource corresponding to the uplink data information;
transmitting the second information on a predefined resource in the overlapping time domain resource in the resource corresponding to the uplink data information;
repeatedly transmitting the second information on the overlapping time domain resource in the resource corresponding to the uplink data information; and
transmitting, by using a same modulation scheme as that of the uplink data information, the second information on the overlapping time domain resource in the resource corresponding to the uplink data information.

Optionally, the transceiver unit 1302 is further configured to:
further transmit a reference signal on the overlapping time domain resource in the resource corresponding to the uplink data information.

Optionally, the first information includes the third information. The uplink control information includes the channel state information and does not include the hybrid automatic repeat request information and the scheduling request information.

Optionally, the first information includes the third information, and the transceiver unit 1302 is further configured to perform at least one of the following operations:
transmitting the third information on the overlapping time domain resource in a resource corresponding to the uplink data information; and
transmitting the third information on the overlapping time domain resource in a resource corresponding to the uplink control information.

Optionally, the first information includes the second information and the third information, and the transceiver unit 1302 is further configured to perform at least one of the following operations:
transmitting the first information on the overlapping time domain resource in a resource corresponding to the uplink data information; and
transmitting the first information on the overlapping time domain resource in a resource corresponding to the uplink control information.

Optionally, that the transceiver unit 1302 transmits the first information on the overlapping time domain resource in the resource corresponding to the uplink data information includes at least one of the following:
transmitting the second information in the first information on a predefined resource in the overlapping time domain resource in the resource corresponding to the uplink data information;
skipping transmitting the third information in the first information on the predefined resource in the overlapping time domain resource in the resource corresponding to the uplink data information;
transmitting the third information in the first information on a resource other than the predefined resource in the overlapping time domain resource in the resource corresponding to the uplink data information;
transmitting the first information on the overlapping time domain resource in the resource corresponding to the uplink data information, where the second information in the first information and the third information in the first information occupy different time-frequency resources; and
transmitting, by using a same modulation scheme, the second information and the third information in the first information on the overlapping time domain resource in the resource corresponding to the uplink data information.

Optionally, the transceiver unit 1302 is further configured to transmit a reference signal on the overlapping time domain resource in the resource corresponding to the uplink data information.

Optionally, the transceiver unit 1302 is further configured to receive indication information sent by a base station, and the indication information includes at least one of the following information:
resource allocation information of the time domain resource corresponding to the uplink control information;
resource allocation information of the time domain resource corresponding to the uplink data information;
indication information of the overlapping time domain resource;
indication information of content included in the first information; and
indication information of a manner of transmitting the first information on the overlapping time domain resource.

According to the apparatus in this embodiment of the present invention, a problem of transmitting uplink control information or uplink data information when there are uplink control information and uplink data information that correspond to time domain resources of different lengths and a conflict occurs between the time domain resources corresponding to the uplink control information and the uplink data information can be resolved.

### Embodiment 6

Based on a same inventive concept as that of Embodiment 2, this embodiment of the present invention further provides an uplink information transmission base station. A method corresponding to the uplink information transmission base station is the uplink information transmission method in Embodiment 2 of the present invention. Therefore, for implementation of the uplink information transmission base station in this embodiment of the present invention, refer to implementation of the method, and repetitions are not described herein again.

Corresponding to the foregoing, this embodiment of the present invention further provides an uplink control information transmission apparatus applied to a base station, applied to the base station, and the apparatus includes:
a transceiver unit, configured to: receive uplink data information on a time domain resource corresponding to the uplink data information, and receive uplink control information on a time domain resource corresponding to the uplink control information; and a processing unit, configured to demodulate the received uplink data information or uplink control information, where a length of the time domain resource corresponding to the uplink data information is not equal to a length of the time domain resource corresponding to the uplink control information, and the uplink control information includes at least one of hybrid automatic repeat request information, channel state information, and scheduling request information.

When the time domain resource corresponding to the uplink data information overlaps with the time domain resource corresponding to the uplink control information, the transceiver unit is further configured to receive first information on the overlapping time domain resource, and the processing unit is further configured to demodulate the received first information, where the first information includes at least one of second information and third information.

The second information includes some information in the uplink control information or all information in the uplink control information, and the third information includes some information in the uplink data information or all information in the uplink data information.

Optionally, that a length of the time domain resource corresponding to the uplink data information is not equal to a length of the time domain resource corresponding to the uplink control information includes:
the length of the time domain resource corresponding to the uplink data information is greater than the length of the time domain resource corresponding to the uplink control information; or
the length of the time domain resource corresponding to the uplink data information is less than the length of the time domain resource corresponding to the uplink control information.

Optionally, the first information includes the second information, and the transceiver unit is further configured to perform at least one of the following operations:
receiving the second information on the overlapping time domain resource in a resource corresponding to the uplink data information; and
receiving the second information on the overlapping time domain resource in a resource corresponding to the uplink control information.

Optionally, that the transceiver unit receives the second information on the overlapping time domain resource in the resource corresponding to the uplink data information includes at least one of the following:
receiving, by using a format corresponding to the uplink control information, the second information on the overlapping time domain resource in the resource corresponding to the uplink data information;
receiving the second information on a predefined resource in the overlapping time domain resource in the resource corresponding to the uplink data information;
repeatedly receiving the second information on the overlapping time domain resource in the resource corresponding to the uplink data information; and
receiving, by using a same modulation scheme as that of the uplink data information, the second information on the overlapping time domain resource in the resource corresponding to the uplink data information.

Optionally, the transceiver unit is further configured to receive a reference signal on the overlapping time domain resource in the resource corresponding to the uplink data information.

The processing unit is further configured to demodulate the second information based on the reference signal.

Optionally, the first information includes the third information. The uplink control information includes the channel state information and does not include the hybrid automatic repeat request information and the scheduling request information.

Optionally, the first information includes the third information, and the transceiver unit is further configured to perform at least one of the following operations:
receiving the third information on the overlapping time domain resource in a resource corresponding to the uplink data information; and
receiving the third information on the overlapping time domain resource in a resource corresponding to the uplink control information.

Optionally, the first information includes the second information and the third information, and the transceiver unit is further configured to perform at least one of the following operations:
receiving the first information on the overlapping time domain resource in a resource corresponding to the uplink data information; and
receiving the first information on the overlapping time domain resource in a resource corresponding to the uplink control information.

Optionally, that the transceiver unit receives the first information on the overlapping time domain resource in the resource corresponding to the uplink data information includes at least one of the following:
receiving the second information in the first information on a predefined resource in the overlapping time domain resource in the resource corresponding to the uplink data information;
receiving the third information in the first information on a resource other than the predefined resource in the overlapping time domain resource in the resource corresponding to the uplink data information;
receiving the first information on the overlapping time domain resource in the resource corresponding to the uplink data information, where the second information in the first information and the third information in the first information occupy different time-frequency resources; and
receiving, by using a same modulation scheme, the second information and the third information in the first information on the overlapping time domain resource in the resource corresponding to the uplink data information.

Optionally, the transceiver unit is further configured to receive a reference signal on the overlapping time domain resource in the resource corresponding to the uplink data information.

The processing unit is further configured to demodulate the first information based on the reference signal.

Optionally, the transceiver unit is further configured to send indication information to user equipment, and the indication information includes at least one of the following information:
resource allocation information of the time domain resource corresponding to the uplink control information;
resource allocation information of the time domain resource corresponding to the uplink data information;
indication information of the overlapping time domain resource;
indication information of content included in the first information; and
indication information of a manner of transmitting the first information on the overlapping time domain resource.

According to the apparatus in this embodiment of the present invention, a problem of transmitting uplink control information or uplink data information when there are uplink control information and uplink data information that correspond to time domain resources of different lengths and a conflict occurs between the time domain resources corresponding to the uplink control information and the uplink data information can be resolved.

The embodiments of the present invention provide the uplink information transmission method and transmission apparatus, so that when the uplink control information and the uplink data information are conflicted with each other, it can be ensured that the uplink control information having a relatively high priority is transmitted, or demodulation performance of the uplink data information can be ensured, or it can be ensured that the uplink control information having a relatively high priority is transmitted when demodulation performance of the uplink data information is relatively little affected.

For the system embodiments, because they basically correspond to the method embodiments, for a relevant part, refer to a part of the description of the method embodiments. The described system embodiment is merely an example. The units described as separate parts may or may not be physically separate, and parts displayed as units may or may not be physical units, may be located in one location, or may be distributed on a plurality of network units. Some or all of the modules may be selected based on actual needs to achieve the objectives of the solutions of the embodiments. A person of ordinary skill in the art may understand and implement the embodiments of the present invention without creative efforts.

The present invention can be described in the general context of computer-executable instructions executed by a computer, for example, a program module. Generally, the program module includes a routine, program, object, component, data structure, and the like for executing a particular task or implementing a particular abstract data type. The present invention may also be practiced in distributed computing environments in which tasks are performed by remote processing devices that are connected by using a communications network. In a distributed computing environment, program modules may be located in both local and remote computer storage media including storage devices.

A person of ordinary skill in the art may understand that all or a part of the steps of the method implementations may be implemented by a program instructing related hardware. The program may be stored in a computer-readable storage medium, such as a ROM, a RAM, a magnetic disk, or a compact disc.

It should be noted that in this specification, relational terms such as first and second are only used to distinguish one entity or operation from another, and do not necessarily require or imply that any actual relationship or sequence exists between these entities or operations. Moreover, the terms "include", "comprise", or their any other variant is intended to cover a non-exclusive inclusion, so that a process, a method, an article, or a device that includes a list of elements not only includes those elements but also includes other elements which are not expressly listed, or further includes elements inherent to such process, method, article, or device. An element preceded by "includes a..." does not, without more constraints, preclude the existence of additional identical elements in the process, method, article, or device that includes the element.

In short, the foregoing descriptions are merely examples of embodiments of the present invention, but are not intended to limit the protection scope of the present invention. Specific examples are used in this specification to describe the principle and implementations of the present invention. The descriptions of the foregoing embodiments are merely intended to help understand the method and core idea of the present invention. In addition, a person skilled in the art may, based on the idea of the present invention, make modifications with respect to the specific implementations and the application scope. Therefore, the content of this specification shall not be construed as a limitation on the present invention. Therefore, the content of this specification shall not be construed as a limitation on the present invention. Any modification, equivalent replacement, or improvement made without departing from the spirit and principle of the present invention shall fall within the protection scope of the present invention.

## Claims

1. An uplink information transmission method, wherein the method comprises:
determining, by user equipment, uplink data information and uplink control information, wherein a length of a time domain resource corresponding to the uplink data information is not equal to a length of a time domain resource corresponding to the uplink control information, and the uplink control information comprises at least one of hybrid automatic repeat request information, channel state information, or scheduling request information; and
when the time domain resource corresponding to the uplink data information overlaps with the time domain resource corresponding to the uplink control information, transmitting, by the user equipment, first information on the overlapping time domain resource, wherein the first information comprises at least one of second information and third information, wherein
the second information comprises some information in the uplink control information or all information in the uplink control information, and the third information comprises some information in the uplink data information or all information in the uplink data information.

2. The method according to claim 1, wherein that a length of a time domain resource corresponding to the uplink data information is not equal to a length of a time domain resource corresponding to the uplink control information comprises:
the length of the time domain resource corresponding to the uplink data information is greater than the length of the time domain resource corresponding to the uplink control information; or
the length of the time domain resource corresponding to the uplink data information is less than the length of the time domain resource corresponding to the uplink control information.

3. The method according to claim 1 or 2, wherein the first information comprises the second information, and the method further comprises at least one of the following steps:
transmitting, by the user equipment, the second information on the overlapping time domain resource in a resource corresponding to the uplink data information; and
transmitting, by the user equipment, the second information on the overlapping time domain resource in a resource corresponding to the uplink control information.

4. The method according to claim 3, wherein the transmitting, by the user equipment, the second information on the overlapping time domain resource in a resource corresponding to the uplink data information comprises at least one of the following steps:
transmitting, by the user equipment by using a format corresponding to the uplink control information, the second information on the overlapping time domain resource in the resource corresponding to the uplink data information;
transmitting, by the user equipment, the second information on a predefined resource in the overlapping time domain resource in the resource corresponding to the uplink data information;
repeatedly transmitting, by the user equipment, the second information on the overlapping time domain resource in the resource corresponding to the uplink data information; and
transmitting, by the user equipment by using a same modulation scheme as that of the uplink data information, the second information on the overlapping time domain resource in the resource corresponding to the uplink data information.

5. The method according to claim 4, wherein the method further comprises:
further transmitting, by the user equipment, a reference signal on the overlapping time domain resource in the resource corresponding to the uplink data information.

6. The method according to claim 1 or 2, wherein the first information comprises the third information, and the uplink control information comprises the channel state information and does not comprise the hybrid automatic repeat request information and the scheduling request information.

7. The method according to any one of claim 1, 2, or 6, wherein the first information comprises the third information, and the method further comprises at least one of the following steps:
transmitting, by the user equipment, the third information on the overlapping time domain resource in a resource corresponding to the uplink data information; and
transmitting, by the user equipment, the third information on the overlapping time domain resource in a resource corresponding to the uplink control information.

8. The method according to claim 1 or 2, wherein the first information comprises the second information and the third information, and the method further comprises at least one of the following steps:
transmitting, by the user equipment, the first information on the overlapping time domain resource in a resource corresponding to the uplink data information; and
transmitting, by the user equipment, the first information on the overlapping time domain resource in a resource corresponding to the uplink control information.

9. The method according to claim 8, wherein the transmitting, by the user equipment, the first information on the overlapping time domain resource in a resource corresponding to the uplink data information comprises at least one of the following steps:
transmitting, by the user equipment, the second information in the first information on a predefined resource in the overlapping time domain resource in the resource corresponding to the uplink data information;
transmitting, by the user equipment, the third information in the first information on a resource other than the predefined resource in the overlapping time domain resource in the resource corresponding to the uplink data information;
transmitting, by the user equipment, the first information on the overlapping time domain resource in the resource corresponding to the uplink data information, wherein the second information in the first information and the third information in the first information occupy different time-frequency resources; and
transmitting, by the user equipment by using a same modulation scheme, the second information and the third information in the first information on the overlapping time domain resource in the resource corresponding to the uplink data information.

10. The method according to claim 9, wherein the method further comprises:
further transmitting, by the user equipment, a reference signal on the overlapping time domain resource in the resource corresponding to the uplink data information.

11. The method according to any one of claims 1 to 10, wherein the method further comprises:
receiving, by the user equipment, indication information sent by a base station, wherein the indication information comprises at least one of the following information:
resource allocation information of the time domain resource corresponding to the uplink control information;
resource allocation information of the time domain resource corresponding to the uplink data information;
indication information of the overlapping time domain resource;
indication information of content comprised in the first information; and
indication information of a manner of transmitting the first information on the overlapping time domain resource.

12. An uplink information transmission method, wherein the method comprises:
receiving, by a base station, uplink data information on a time domain resource corresponding to the uplink data information, and receiving uplink control information on a time domain resource corresponding to the uplink control information, wherein a length of the time domain resource corresponding to the uplink data information is not equal to a length of the time domain resource corresponding to the uplink control information, and the uplink control information comprises at least one of hybrid automatic repeat request information, channel state information, or scheduling request information; and
when the time domain resource corresponding to the uplink data information overlaps with the time domain resource corresponding to the uplink control information, receiving, by the base station, first information on the overlapping time domain resource, wherein the first information comprises at least one of second information and third information, wherein
the second information comprises some information in the uplink control information or all information in the uplink control information, and the third information comprises some information in the uplink data information or all information in the uplink data information.

13. The method according to claim 12, wherein that a length of the time domain resource corresponding to the uplink data information is not equal to a length of the time domain resource corresponding to the uplink control information comprises:
the length of the time domain resource corresponding to the uplink data information is greater than the length of the time domain resource corresponding to the uplink control information; or
the length of the time domain resource corresponding to the uplink data information is less than the length of the time domain resource corresponding to the uplink control information.

14. The method according to claim 12 or 13, wherein the first information comprises the second information, and the method further comprises at least one of the following steps:
receiving, by the base station, the second information on the overlapping time domain resource in a resource corresponding to the uplink data information; or
receiving, by the base station, the second information on the overlapping time domain resource in a resource corresponding to the uplink control information.

15. The method according to claim 14, wherein the receiving, by the base station, the second information on the overlapping time domain resource in a resource corresponding to the uplink data information comprises at least one of the following steps:
receiving, by the base station by using a format corresponding to the uplink control information, the second information on the overlapping time domain resource in the resource corresponding to the uplink data information;
receiving, by the base station, the second information on a predefined resource in the overlapping time domain resource in the resource corresponding to the uplink data information;
receiving and combining, by the base station, the second information on the overlapping time domain resource in the resource corresponding to the uplink data information; and
receiving, by the base station by using a same modulation scheme as that of the uplink data information, the second information on the overlapping time domain resource in the resource corresponding to the uplink data information.

16. The method according to claim 15, wherein the method further comprises:
further receiving, by the base station, a reference signal on the overlapping time domain resource in the resource corresponding to the uplink data information; and
demodulating, by the base station, the second information based on the reference signal.

17. The method according to claim 12 or 13, wherein the first information comprises the third information, and the uplink control information comprises the channel state information and does not comprise the hybrid automatic repeat request information and the scheduling request information.

18. The method according to any one of claim 12, 13, or 17, wherein the first information comprises the third information, and the method further comprises at least one of the following steps:
receiving, by the base station, the third information on the overlapping time domain resource in a resource corresponding to the uplink data information; and
receiving, by the base station, the third information on the overlapping time domain resource in a resource corresponding to the uplink control information.

19. The method according to claim 12 or 13, wherein the first information comprises the second information and the third information, and the method further comprises at least one of the following steps:
receiving, by the base station, the first information on the overlapping time domain resource in a resource corresponding to the uplink data information; and
receiving, by the base station, the first information on the overlapping time domain resource in a resource corresponding to the uplink control information.

20. The method according to claim 19, wherein the receiving, by the base station, the first information on the overlapping time domain resource in a resource corresponding to the uplink data information comprises at least one of the following steps:
receiving, by the base station, the second information in the first information on a predefined resource in the overlapping time domain resource in the resource corresponding to the uplink data information;
receiving, by the base station, the third information in the first information on a resource other than the predefined resource in the overlapping time domain resource in the resource corresponding to the uplink data information;
receiving, by the base station, the first information on the overlapping time domain resource in the resource corresponding to the uplink data information, wherein the second information in the first information and the third information in the first information occupy different time-frequency resources; and
receiving, by the base station by using a same modulation scheme, the second information and the third information in the first information on the overlapping time domain resource in the resource corresponding to the uplink data information.

21. The method according to claim 20, wherein the method further comprises:
further receiving, by the base station, a reference signal on the overlapping time domain resource in the resource corresponding to the uplink data information; and
demodulating, by the base station, the first information based on the reference signal.

22. The method according to any one of claims 12 to 21, wherein the method further comprises:
sending, by the base station, indication information to user equipment, wherein the indication information comprises at least one of the following information:
resource allocation information of the time domain resource corresponding to the uplink control information;
resource allocation information of the time domain resource corresponding to the uplink data information;
indication information of the overlapping time domain resource;
indication information of content comprised in the first information; and
indication information of a manner of transmitting the first information on the overlapping time domain resource.

23. An uplink control information transmission apparatus, wherein the apparatus comprises:
a processor, configured to determine uplink data information and uplink control information, wherein a length of a time domain resource corresponding to the uplink data information is not equal to a length of a time domain resource corresponding to the uplink control information, and the uplink control information comprises at least one of hybrid automatic repeat request information, channel state information, or scheduling request information; and
a transceiver, configured to: when the time domain resource corresponding to the uplink data information overlaps with the time domain resource corresponding to the uplink control information, transmit first information on the overlapping time domain resource, wherein the first information comprises at least one of second information and third information, wherein
the second information comprises some information in the uplink control information or all information in the uplink control information, and the third information comprises some information in the uplink data information or all information in the uplink data information.

24. The apparatus according to claim 23, wherein that a length of a time domain resource corresponding to the uplink data information is not equal to a length of a time domain resource corresponding to the uplink control information comprises:
the length of the time domain resource corresponding to the uplink data information is greater than the length of the time domain resource corresponding to the uplink control information; or
the length of the time domain resource corresponding to the uplink data information is less than the length of the time domain resource corresponding to the uplink control information.

25. The apparatus according to claim 23 or 24, wherein the first information comprises the second information, and the transceiver is further configured to perform at least one of the following operations:
transmitting the second information on the overlapping time domain resource in a resource corresponding to the uplink data information; and
transmitting the second information on the overlapping time domain resource in a resource corresponding to the uplink control information.

26. The apparatus according to claim 25, wherein that the transceiver transmits the second information on the overlapping time domain resource in the resource corresponding to the uplink data information comprises at least one of the following:
transmitting, by using a format corresponding to the uplink control information, the second information on the overlapping time domain resource in the resource corresponding to the uplink data information;
transmitting the second information on a predefined resource in the overlapping time domain resource in the resource corresponding to the uplink data information;
repeatedly transmitting the second information on the overlapping time domain resource in the resource corresponding to the uplink data information; and
transmitting, by using a same modulation scheme as that of the uplink data information, the second information on the overlapping time domain resource in the resource corresponding to the uplink data information.

27. The apparatus according to claim 26, wherein the transceiver is further configured to:
further transmit a reference signal on the overlapping time domain resource in the resource corresponding to the uplink data information.

28. The apparatus according to claim 23 or 24, wherein the first information comprises the third information, and the uplink control information comprises the channel state information and does not comprise the hybrid automatic repeat request information and the scheduling request information.

29. The apparatus according to any one of claim 23, 24, or 28, wherein the first information comprises the third information, and the transceiver is further configured to perform at least one of the following operations:
transmitting the third information on the overlapping time domain resource in a resource corresponding to the uplink data information; and
transmitting the third information on the overlapping time domain resource in a resource corresponding to the uplink control information.

30. The apparatus according to claim 23 or 24, wherein the first information comprises the second information and the third information, and the transceiver is further configured to perform at least one of the following operations:
transmitting the first information on the overlapping time domain resource in a resource corresponding to the uplink data information; and
transmitting the first information on the overlapping time domain resource in a resource corresponding to the uplink control information.

31. The apparatus according to claim 30, wherein that the transceiver transmits the first information on the overlapping time domain resource in the resource corresponding to the uplink data information comprises at least one of the following:
transmitting the second information in the first information on a predefined resource in the overlapping time domain resource in the resource corresponding to the uplink data information;
transmitting the third information in the first information on a resource other than the predefined resource in the overlapping time domain resource in the resource corresponding to the uplink data information;
transmitting the first information on the overlapping time domain resource in the resource corresponding to the uplink data information, wherein the second information in the first information and the third information in the first information occupy different time-frequency resources; and
transmitting, by using a same modulation scheme, the second information and the third information in the first information on the overlapping time domain resource in the resource corresponding to the uplink data information.

32. The apparatus according to claim 31, wherein the transceiver is further configured to transmit a reference signal on the overlapping time domain resource in the resource corresponding to the uplink data information.

33. The apparatus according to any one of claims 23 to 32, wherein the transceiver is further configured to receive indication information sent by a base station, wherein the indication information comprises at least one of the following information:
resource allocation information of the time domain resource corresponding to the uplink control information;
resource allocation information of the time domain resource corresponding to the uplink data information;
indication information of the overlapping time domain resource;
indication information of content comprised in the first information; and
indication information of a manner of transmitting the first information on the overlapping time domain resource.

34. An uplink control information transmission apparatus, wherein the apparatus comprises:
a transceiver, configured to: receive uplink data information on a time domain resource corresponding to the uplink data information, and receive uplink control information on a time domain resource corresponding to the uplink control information; and
a processor, configured to demodulate the uplink data information and the uplink control information, wherein
a length of the time domain resource corresponding to the uplink data information is not equal to a length of the time domain resource corresponding to the uplink control information, and the uplink control information comprises at least one of hybrid automatic repeat request information, channel state information, or scheduling request information;
when the time domain resource corresponding to the uplink data information overlaps with the time domain resource corresponding to the uplink control information, the transceiver is further configured to receive first information on the overlapping time domain resource, and the processor is further configured to demodulate the first information;
the first information comprises at least one of second information and third information; and
the second information comprises some information in the uplink control information or all information in the uplink control information, and the third information comprises some information in the uplink data information or all information in the uplink data information.

35. The apparatus according to claim 34, wherein that a length of the time domain resource corresponding to the uplink data information is not equal to a length of the time domain resource corresponding to the uplink control information comprises:
the length of the time domain resource corresponding to the uplink data information is greater than the length of the time domain resource corresponding to the uplink control information; or
the length of the time domain resource corresponding to the uplink data information is less than the length of the time domain resource corresponding to the uplink control information.

36. The apparatus according to claim 34 or 35, wherein the first information comprises the second information, and the transceiver is further configured to perform at least one of the following operations:
receiving the second information on the overlapping time domain resource in a resource corresponding to the uplink data information; and
receiving the second information on the overlapping time domain resource in a resource corresponding to the uplink control information.

37. The apparatus according to claim 36, wherein that the transceiver receives the second information on the overlapping time domain resource in the resource corresponding to the uplink data information comprises at least one of the following:
receiving, by using a format corresponding to the uplink control information, the second information on the overlapping time domain resource in the resource corresponding to the uplink data information;
receiving the second information on a predefined resource in the overlapping time domain resource in the resource corresponding to the uplink data information;
repeatedly receiving the second information on the overlapping time domain resource in the resource corresponding to the uplink data information; and
receiving, by using a same modulation scheme as that of the uplink data information, the second information on the overlapping time domain resource in the resource corresponding to the uplink data information.

38. The apparatus according to claim 37, wherein the transceiver is further configured to receive a reference signal on the overlapping time domain resource in the resource corresponding to the uplink data information; and
the processor is further configured to demodulate the second information based on the reference signal.

39. The apparatus according to claim 34 or 35, wherein the first information comprises the third information, and the uplink control information comprises the channel state information and does not comprise the hybrid automatic repeat request information and the scheduling request information.

40. The apparatus according to any one of claim 34, 35, or 39, wherein the first information comprises the third information, and the transceiver is further configured to perform at least one of the following operations:
receiving the third information on the overlapping time domain resource in a resource corresponding to the uplink data information; and
receiving the third information on the overlapping time domain resource in a resource corresponding to the uplink control information.

41. The apparatus according to claim 34 or 35, wherein the first information comprises the second information and the third information, and the transceiver is further configured to perform at least one of the following operations:
receiving the first information on the overlapping time domain resource in a resource corresponding to the uplink data information; and
receiving the first information on the overlapping time domain resource in a resource corresponding to the uplink control information.

42. The apparatus according to claim 41, wherein that the transceiver receives the first information on the overlapping time domain resource in the resource corresponding to the uplink data information comprises at least one of the following:
receiving the second information in the first information on a predefined resource in the overlapping time domain resource in the resource corresponding to the uplink data information;
receiving the third information in the first information on a resource other than the predefined resource in the overlapping time domain resource in the resource corresponding to the uplink data information;
receiving the first information on the overlapping time domain resource in the resource corresponding to the uplink data information, wherein the second information in the first information and the third information in the first information occupy different time-frequency resources; and
receiving, by using a same modulation scheme, the second information and the third information in the first information on the overlapping time domain resource in the resource corresponding to the uplink data information.

43. The apparatus according to claim 42, wherein the transceiver is further configured to receive a reference signal on the overlapping time domain resource in the resource corresponding to the uplink data information; and
the processor is further configured to demodulate the first information based on the reference signal.

44. The apparatus according to any one of claims 34 to 43, wherein the transceiver is further configured to send indication information to user equipment, wherein the indication information comprises at least one of the following information:
resource allocation information of the time domain resource corresponding to the uplink control information;
resource allocation information of the time domain resource corresponding to the uplink data information;
indication information of the overlapping time domain resource;
indication information of content comprised in the first information; and
indication information of a manner of transmitting the first information on the overlapping time domain resource.
